# EUROPEAN PATENT APPLICATION

(11) **EP 4 492 120 A1**
(43) Date of publication of application: **15.01.2025**
(21) Application number: 23849415.7
(22) Date of filing: 01.08.2023
(51) Int. Cl.: G02B 23/04

(54) **MULTI-MODE HANDHELD OPTICAL DEVICE**

(30) Priority: 01.08.2022 WO PCT/CN2022/109496; 14.02.2023 WO PCT/CN2023/075973; 16.05.2023 CN 202321206272 U
(71) Applicant: Infiray Technologies Co., Ltd., Hefei, Anhui 230001 (CN)
(72) Inventor: LUO, Ding, Hefei, Anhui 230001 (CN)
(74) Representative: Reiser & Partner Patentanwälte mbB
(86) International application number: PCT/CN2023/110553
(87) International publication number: WO 2024/027709

(57) **Abstract**

A multi- mode handheld optical device, comprising a white light assembly (10), a laser assembly (20), an infrared assembly (30), and a display module (40). When a white light mode is turned on, a visible light signal in a target field of view is received by a white light objective lens group (13), and then passes through a relay beam splitter (15) to form a white light image; when a laser ranging mode is turned on, a laser signal reflected back by a target is received by the white light objective lens group (13), is then split by the relay beam
splitter (15), deviates from a corresponding visible light path, and is used for calculating distance information of a detection target, and the distance information is displayed on the display module (40); when an infrared mode is toned on, the infrared assembly (30) collects an infrared light signal in the target field of view, and converts the infrared light signal into an infrared image, and the infrared image is displayed on the display module (40); and the distance information and/or the infrared image displayed on the display module (40) are
finally transmitted to the rear end of the visible light path so as to be fused with the white light image.

## Description

### TECHNICAL FIELD

The application relates to the field of image processing, and more particularly to a multi-mode handheld optical device.

### BACKGROUND OF THE ART

At present, the mainstream handheld optical devices available on the market, such as handheld telescopes, are mostly visible light telescopes with a single light path, which have a monotonous function and do not meet people's increasingly diverse needs for handheld telescopes.

For example, in order to enhance the target search capability of the handheld telescopes, a visible light telescope having a laser ranging function has been proposed. On the basis of the structure of the existing visible light telescopes, a laser ranging structure is added to realize laser emission, reception and ranging calculation. However, this additive design results in an increase of the size of the handheld telescope, and this is not conducive to the design requirement of portability.

### Technical Problems

In order to solve the existing technical problems, embodiments of the application provide a multi-mode handheld optical device that has a compact structure, a relatively small overall size, and easy portability.

### Technical Solution

An embodiment of the present invention provides a multi-mode handheld optical device, which comprises a visible light assembly, a laser assembly, an infrared assembly, and a display module, the display module being separately connected with the laser assembly and the infrared assembly; the white light assembly comprising at least one white light imaging module, the visible light imaging module comprising an objective lens group and a beamsplitter arranged in sequence along a corresponding visible light path; wherein when a visible light mode is turned on, a visible light of a target field of view is received by the objective lens group and then travels along the corresponding visible light path to transmit through the beamsplitter to then form a visible light image at a rear end of the corresponding visible light path; the laser assembly comprising a laser emitting module and a laser receiving module, wherein when a laser ranging mode is turned on, the laser emitting module emits a pulsed laser toward a detection target, and the laser reflected back by the detection target is received by the objective lens group to then travel along the corresponding visible light path and is subjected to separation by the beamsplitter to deviate from the corresponding visible light path, that is used by the laser receiving module to calculate distance information of the detection target to be displayed on the display module; wherein when an infrared mode is turned on, the infrared assembly collects an infrared light of the target field of view for conversion into an infrared image to be displayed on the display module; the distance information and/or the infrared image displayed on the display module finally transmitting to the rear end of the visible light path to fuse with the visible light image.

An embodiment of the present invention also provides a multi-mode handheld optical device, which comprises a visible light assembly, a laser assembly, an infrared assembly, and a display module, the display module being separately connected with and the laser assembly and the infrared assembly; the visible light assembly comprising at least one visible light imaging module, the visible light imaging module comprising an objective lens group and a beamsplitter arranged in sequence along a corresponding visible light path; wherein when a visible light mode is turned on, a visible light of a target field of view is received by the objective lens group and then travels along the corresponding visible light path to transmit through the beamsplitter to then form a visible light image at a rear end of the corresponding visible light path; the laser assembly comprising a laser emitting module and a laser receiving module, the laser emitting module comprising a laser emitter arranged at one side of the beamsplitter, wherein when a laser ranging mode is turned on, the laser emitter emits a pulsed laser toward the beamsplitter to be reflected by the beamsplitter to travel in an opposite direction along the corresponding visible light path to emit through the objective lens group toward a detection target in the target field of view, and the laser reflected back by the detection target is received by the laser receiving module for calculation of distance information of the detection target to be displayed on the display module; wherein when an infrared mode is turned on, the infrared assembly collects an infrared light of the target field of view for conversion into an infrared image to be displayed on the display module; the distance information and/or the infrared image displayed on the display module finally transmitting to the rear end of the visible light path to fuse with the visible light image.

### Advantageous Effect

The multi-mode handheld optical device provided in the above embodiments comprises a visible light assembly, an infrared assembly, and a laser assembly, which can independently and respectively realize a visible light mode, an infrared mode, and a laser ranging mode, wherein the emission and reception of the laser may share the visible light path of the visible light assembly in order to make the structure more compact while multiple modes of the handheld optical device can be realized, and the overall size can be reduced, making the entire device small and easy to carry; in addition, the display module is separately connected with the laser assembly and the infrared assembly, and in the infrared mode, the infrared assembly converts the infrared light into an electrical signal of the infrared image displayed on the display module, and in the laser ranging mode, the laser assembly transmits a distance information displayed on the display module, and the distance information and/or the infrared image displayed on the display module finally transmits to the rear end of the visible light path, and as such, fusion of the infrared image and the visible light image can be realized, and the laser assembly may re-use the part of light path in which the infrared image of the infrared assembly is fused with the visible light image to superimpose the distance information to the visible light image, making the structure compact, and also enhancing the capability of highlighting a target for easy observation.

### BRIEF DESCRIPTION OF THE DRAWINGS

FIG. 1 is a schematic view showing a structure of a multi-mode handheld optical device according to one embodiment;
FIG. 2 is a perspective view showing a multi-mode handheld optical device according to one embodiment;
FIG. 3 is a schematic view illustrating the principle of light paths of a multi-mode handheld optical device according to one embodiment;
FIG. 4 is a schematic view showing an imaging light path of a visible light assembly according to one embodiment, wherein a ranging light path of a laser assembly and the imaging light path of the visible light assembly partly coincide;
FIG. 5 is a schematic view showing an imaging light path of an infrared assembly and a ranging light path of a laser assembly partly coincide according to one embodiment;
FIG. 6 is a schematic view showing a structure of a multi-mode handheld optical device with continuously magnification variable capability according to one embodiment;
FIG. 7 is a schematic view showing a structure of a multi-mode handheld optical device with continuously magnification variable capability according to another embodiment;
FIG. 8 is a schematic view showing a light path configuration of a multi-mode handheld optical device with continuously magnification variable capability according to one embodiment;
FIG. 9 is a schematic view showing a multi-mode binocular handheld optical device according to one embodiment;
FIG. 10 is a schematic view showing a structure of a multi-mode binocular handheld optical device according to another embodiment;
FIG. 11 is a schematic view showing a multi-mode binocular handheld optical device according to a further embodiment;
FIG. 12 is a schematic view showing a right-eye imaging light path according to another embodiment, wherein a laser emitting light path and the right-eye imaging light path partly coincide;
FIG. 13 is a schematic view showing a left-eye imaging light path according to another embodiment, wherein a laser receiving light path and the left-eye imaging light path partly coincide; and
FIG. 14 is a schematic view showing an infrared imaging light path and a laser ranging light path partly coincide.

List of Reference Signs:
visible light assembly 10, visible light passageway (11, A), left-eye visible light passageway 111, right-eye visible light passageway 112, visible light entry window 12, visible light objective lens group 13, rear end image plane 14, front end image plane 141, beamsplitter 15, first beamsplitter 15a, second beamsplitter 15b, incident surface 151, exiting surface 152, intermediate reflecting surface 153, first edge reflecting surface 154, second edge reflecting surface 157, light receiving surface 155, light emitting surface 156, monocular image forming module 16, left-eye image forming module 161, right-eye image forming module 162, zoom lens group 17, ocular lens group 18, lens cap 19, laser assembly 20, laser emitter 21, laser emitting objective lens 22, laser emitting window 220, reflection mirror 221, laser signal processor 23, photoelectric detector 24, laser receiving objective lens 25, infrared assembly 30, infrared passageway (31, B), infrared entry window 32, infrared objective lens group 33, infrared core 34, main control board 35, display module 40, OLED display screen 41, transparent display screen 42, projection module 50, main housing 60

### DETAILED DESCRIPTION OF PREFERRED EMBODIMENTS

A detailed explanation of a technical solution of the present invention will be given below with reference to the disclosure, the drawings, and specific embodiments.

Unless otherwise defined, all technical and scientific terms used herein have the same meaning as commonly understood by the artisans of the technical field to which the present invention belongs. The terminology used herein in the description of the present invention is for the purpose of describing specific embodiments only and is not intended to limit the implementation of the invention. The term "and/or", as used herein, includes any and all combinations of one or more of the associated items so listed.

In the description of the present invention, it should be understood that directional or positional relationships indicated by the terms "center", "upper", "lower", "front", "back", "left", "right", "vertical", "horizontal", "top", "bottom", "inner", and "outer" are based on the directional or positional relationships shown in the drawings and are only used for the convenience of describing the present invention and simplifying the description, and are not intended to indicate or imply the devices or elements referred to must have a specific direction or must be constructed and operated in a specific direction, and therefore are not to be construed as limiting to the present invention. In the description of the present invention, unless otherwise specified, "plurality" means two or more.

In the description of the present invention, it is noted that, unless otherwise clearly stated and limited, the terms "mounting", "interconnecting", and "connecting" should be construed in a broad sense, such as being fixedly connected, or detachably connected, or integrally connected; or being directly connected or indirectly connected through an intermediate medium, or being internal connection between two elements. For those having ordinary skill in the field, the specific meanings of the above terms used in the present invention can be understood according to specific conditions.

In the following description, expressions related to "some embodiments" describe a subset of all possible embodiments, and it is noted that "some embodiments" may be the same subset or different subsets of all possible embodiments and are combinable with each other provided no conflict occurs.

In the field of hunting, traditional visible light telescopes are gradually unable to meet users' needs. With the development of thermal imaging sensor technology, thermal imaging telescopes are gradually becoming more popular among the users. The monocular handheld telescopes that are currently available can be mainly divided into seven categories: the first one being traditional monocular visible light direct telescopes; the second one being monocular visible light direct digital telescopes; the third one being monocular visible light direct telescopes with laser ranging; the fourth one being monocular infrared telescopes; the fifth one being monocular infrared telescopes with laser ranging; the sixth one being monocular digital telescopes with laser ranging; and the seventh one being monocular infrared digital telescopes with laser ranging.

However, the present inventor found in the researches that to realize composite functionality for these monocular handheld telescopes, such as an implementation solution of increasing a laser ranging function on the basis of the visible light target observation function or infrared target observation function, it is all achieved by superimposing a laser ranging structure that realizes laser emission, reception and ranging calculation on the basis of the structure of the existing visible light telescopes, so that the size of the monocular handheld telescopes becomes too large, affecting the portability. In addition, for multispectral telescopes that support both visible light and infrared target observation, the visible light image and the infrared image are observed with eyepiece 1 and eyepiece 2 that are separate from each other, and this makes the product size very large and the observation comfort for observing the visible light image and the infrared image with the left eye and the right eye respectively is poor.

In order to solve the shortcomings of the existing technology, the present inventor proposed an implementation solution to realize three-light fusion of visible light, infrared, and laser, and proposed a design idea of setting the receiving or emitting light path of the laser to be coaxial with the visible light path, so that the handheld optical device can provide more operation modes that meet the needs of multiple application scenarios, and the individual advantages of visible light and infrared imaging can be retained through image fusion. The three-light fusion is achieved by using optical elements to finally combine multiple light paths, thus to realize the light path design of the handheld optical device, and this can achieve a better effect of fusion. In addition, the design idea of setting the receiving light path or emitting light path of the laser to be coaxial with the visible light path can effectively reduce the size of the handheld optical device to ensure portability thereof.

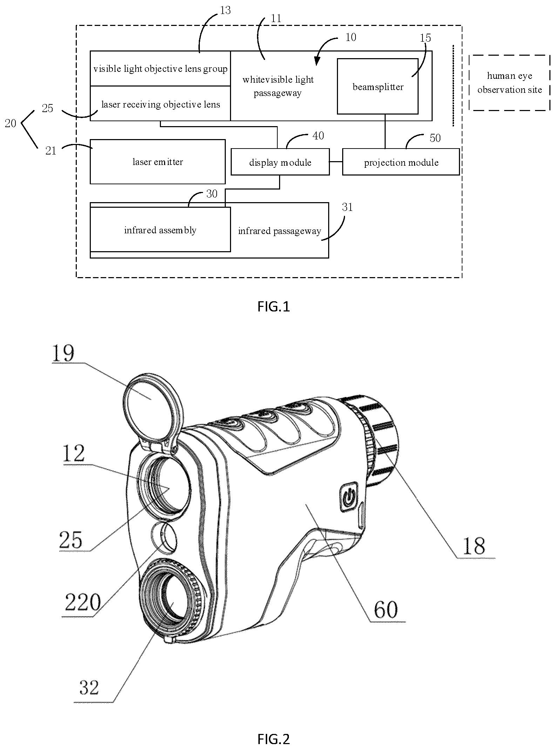

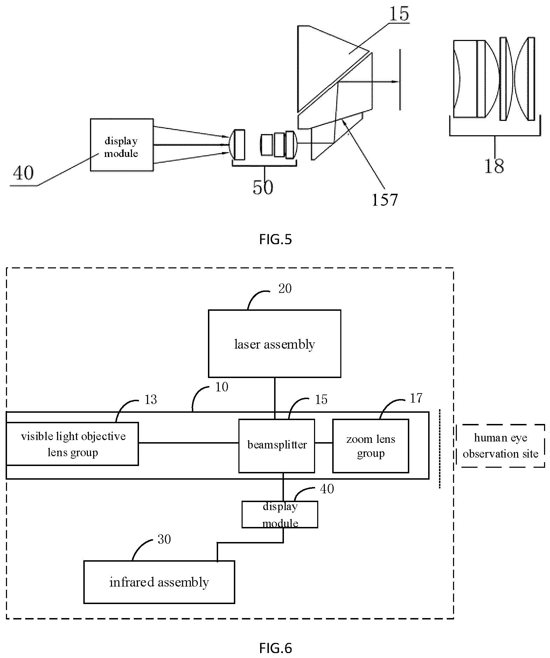

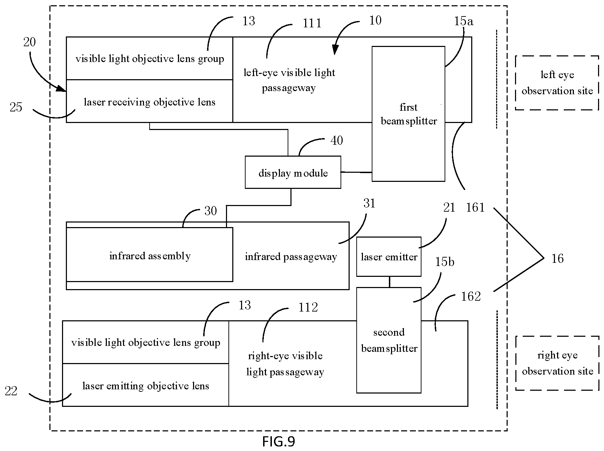

With the design ideas provided by the present invention, the handheld optical device can have a variety of different specific ways of implementation. For example, based on the structure of a known monocular or binocular visible light handheld optical device, a visible light assembly comprises at least one visible light imaging module, and the visible light imaging module receives a visible light in a target field of view and then forms a visible light image at a rear end of the corresponding visible light path. A beamsplitter that allows visible light to transmit therethrough and a laser assembly are arranged in the visible light path of the visible light imaging module, so that the receiving or emitting light path of laser and the visible light path are coaxial, and the beamsplitter arranged in the visible light path fulfills separation of the coaxial visible light and laser. Among them, the receiving light path of laser mainly refers to an incoming travel path along which a laser reflected by a detection target of the target field of view gets incident from the outside to the interior of the handheld optical device, and the emitting light path of laser mainly refers to an outgoing travel path along which a laser emitting toward a detection target travels before moving from the interior of the handheld optical device toward the outside. The visible light imaging module comprises an objective lens group arranged at a front end of the visible light path, and a visible light in the target field of view is collected by the objective lens group to travel along the visible light path, wherein the receiving light path of the laser and the visible light path being coaxial (embodiments described with reference to FIGS. 1-5 and FIGS. 6-8 being taken as examples) refers to light paths being arranged such that a return laser is collected to travel through the objective lens group arranged at the front end of the visible light path into the interior of the handheld optical device; and the emitting light path of the laser and the visible light path being coaxial (embodiments described with reference to FIGS. 9-11 being taken as examples) refers to light paths being arranged such that an outgoing laser transmits through the objective lens group arranged at the front end of the visible light path to get to the outside of the handheld optical device. The objective lens group at the front end of the visible light path can be any lens group that admits transmission of visible light and laser, such as a visible light objective lens group (embodiments described with reference to FIGS. 6-8 being taken as an example) of a known monocular or binocular visible light handheld optical device arranged at the front of a visible light imaging module, or a combination of a visible light objective lens group and a laser objective lens (embodiments described with reference to FIGS. 1-5 and FIGS. 9-11 being taken as an example).

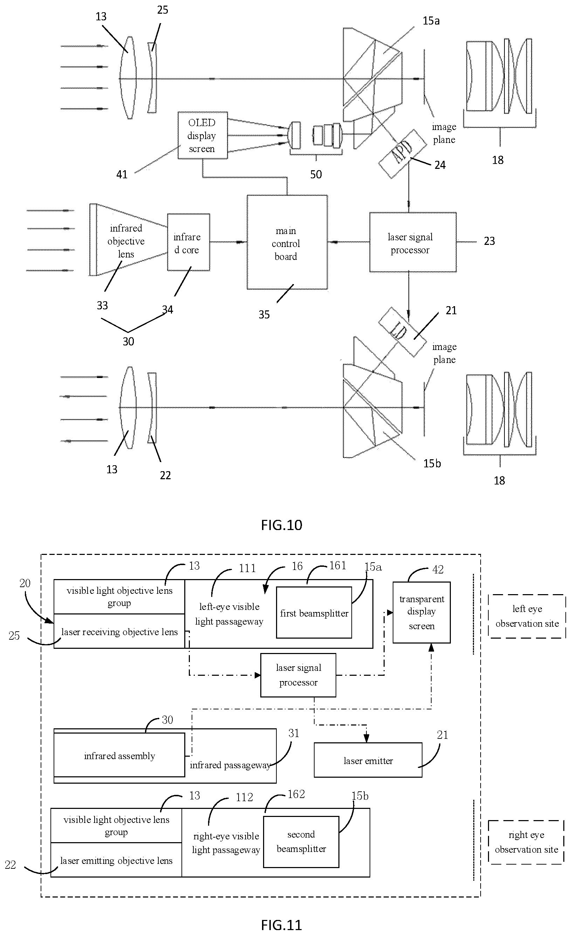

Further, three-light fusion is achieved by using optical elements to finally combine multiple light paths of a handheld optical device, and this can be achieved by setting a display module at one side of the beamsplitter in the visible light path, so as to fulfill reflecting distance information and/or an infrared image displayed in the display module to combine with the visible light path (embodiments described with reference to FIGS. 1-5, FIGS. 6-8, and FIGS. 9-10 being taken as an example), or directly setting up a transparent display screen in the visible light path which can fuse the distance information and/or the infrared image displayed thereon with the visible light transmitting therethrough (embodiment described with reference to FIG. 11 being taken as an example).

In order to have a more comprehensive understanding of the specific ways of implementation of handheld optical device available under the design ideas provided by the present inventor, the description below will be provided for three types of handheld optical device products, which are mainly a monocular multi-mode handheld optical device (FIGS. 1-5), a multi-mode handheld optical device with continuously magnification variable monocular (FIGS. 6-8), and a binocular multi-mode handheld optical device (FIGS. 9-14).

Referring to FIGS. 1-3, an embodiment of the application provides a monocular multi-mode handheld optical device. The handheld optical device can be a handheld telescope, or other optical devices, such as a sighting device that enables observation of a target made at a distance. A display module arranged at one side of a visible light path and an objective lens group comprising a combination of a visible light objective lens group and a laser objective lens is taken as an example. The multi-mode handheld optical device comprises a visible light assembly 10, a laser assembly 20, an infrared assembly 30, and a display module 40; the visible light assembly 10 comprises a visible light objective lens group 13 and a beamsplitter 15 that are sequentially arranged in the visible light path, and when a visible light mode is turned on, visible light in the target field of view is received by the visible light objective lens group 13 and transmits along the visible light path toward the beamsplitter 15, where a part of the visible light transmits through the beamsplitter 15 to form an image at a rear end of the visible light path; the laser assembly 20 comprises a laser receiving objective lens 25 that is arranged in the visible light path. When a laser ranging mode is turned on, the laser assembly 20 emits a pulsed laser toward a detection target, and a laser reflected back by the detection target is received by the laser receiving objective lens 25 and transmits along the visible light path toward the beamsplitter 15, the laser separated by the beamsplitter 15 for being subsequently used in calculation of distance information of the detection target to be displayed on the display module 40. When an infrared mode is turned on, the infrared assembly 30 collects an infrared light in the target field of view for conversion into an infrared image that is displayed on the display module 40; the display module 40 is arranged at one side of the beamsplitter 15, and the distance information and/or the infrared image displayed on the display module 40 transmits in the form of an optical signal into the beamsplitter 15 and is reflected by the beamsplitter 15 toward the rear end of the visible light path.

In the above, the display module 40 can be a display screen. The detection target refers to an observation object located in the target field of view, such as an animal in a hunting scenario. The visible light assembly 10 refers to an optical component that collects visible light in the target field of view to form a corresponding visible light image, and take a monocular handheld telescope as an example of the multi-mode handheld optical device, the visible light assembly 10 can be a visible light telescope component of the monocular handheld telescope. For easy distinguishment and illustration, in the description of the embodiment of monocular multi-mode handheld optical device, the visible light assembly 10 that includes a visible light imaging module is also referred to as a monocular visible light assembly. Here, the objective lens group that is arranged at a front end of the visible light path is a combination of a visible light objective lens group 13 and a laser receiving objective lens 25.

In the above, a human eye observation site is at the rear end of the visible light path, and the visible light assembly 10 may comprise an ocular lens group 18 arranged at the end of the visible light path, and an image plane is arranged between the beamsplitter 15 and the ocular lens group 18, and a human eye may observe an image on the image plane directly through the ocular lens group 18.

In the above embodiment, the multi-mode handheld optical device comprises the visible light assembly 10, the infrared assembly 30, and the laser assembly 20, which independently and respectively fulfill the visible light mode, the infrared mode, and the laser ranging mode, and the laser receiving objective lens 25 is arranged in the visible light path to allow the receiving light path of laser to share the visible light path of the visible light assembly 10, so that under the condition that multiple modes of a handheld optical device can be fulfilled, the structure is more compact so as to effectively reduce the overall size and make the entire device compact and easy to carry; in addition, the display module 40 is separately connected with the laser assembly 20 and the infrared assembly 30 and is arranged at one side of the beamsplitter 15, and in the infrared mode, the infrared assembly 30 converts the infrared light into an electrical signal of the infrared image to be transmitted to the display module 40 for displaying, and in the laser ranging mode, the laser assembly 20 transmits the distance information to the display module 40 for displaying, and the distance information and/or the infrared image displayed on the display module 40 is transmitted, in the form of an optical signal, into the beamsplitter 15 to be reflected by the beamsplitter 15 toward the rear end of the visible light path, so that fusion of the infrared image and the visible light image is achieved and the laser assembly 20 reuses the light path along which the infrared image of the infrared assembly 30 is fused into the visible light image to superimpose the distance information obtained through range finding to the visible light image, so as to better achieve the purpose of making the structure of the multi-mode handheld optical device compact and also to enhance the capability of target highlighting a target for easy observation.

In the above, the visible light assembly 10 comprises a visible light entry window 12 arranged at the front end of the visible light path; the visible light objective lens group 13 and the laser receiving objective lens 25 are both arranged at the site of the visible light entry window 12, and when the visible light mode is turned on, the visible light of the target field of view is collected by the visible light objective lens group 13 at the site of the visible light entry window 12 and transmits along the visible light path toward the beamsplitter 15. When the laser ranging mode is turned on, the laser that is reflected back by a detection target in the target field of view is collected by the laser receiving objective lens 25 at the site of the visible light entry window 12 and transmits along the visible light path toward the beamsplitter 15. **In** case that the visible light mode and the laser ranging mode are turned on at the same time, the beamsplitter 15 subjects the visible light and the laser transmitting therein to splitting to have a predetermined ratio of the visible light transmitting and passing therethrough to form an image at the rear end of the visible light path and also to have the laser reflected and deviated from the visible light path to be used for calculation of the distance information of the detection target. The multi-mode handheld optical device is provided, in the interior thereof, with a visible light passageway 11, and the visible light passageway 11 is arranged to extend in a front-rear direction of the multi-mode handheld optical device, and the beamsplitter 15 is arranged in the visible light passageway 11 at a location closer to the ocular lens group 18. The visible light path is formed in the visible light passageway 11, and the laser receiving objective lens 25 of the laser assembly 20 is arranged in the visible light path, and the receiving light path of laser is located in the visible light passageway 11 and may be completely or partly coincident with the visible light path to realize light-path sharing with the visible light path. The visible light mode and the laser ranging mode can be separately and independent turned on, or alternatively, the visible light mode and the laser ranging mode can be turned on simultaneously to thereby provide a user with options for more modes to suit the needs for different scenarios; in addition, the receiving light path of the laser and the visible light path take a light path sharing arrangement so that under the condition that multiple modes of a handheld optical device can be fulfilled, the structure is more compact so as to effectively reduce the overall size and make the entire device compact and easy to carry.

In some embodiments, the multi-mode handheld optical device further comprises a projection module 50 arranged between the beamsplitter 15 and the display module 40; the projection module 50 functions to project the distance information and/or the infrared image displayed on the display module 40 in the form of an optical signal toward the beamsplitter 15 to be reflected by the beamsplitter 15 toward the rear end of the visible light path. The projection module 50 is arranged in alignment with the display module 40, and when the infrared mode is turned on, an infrared image displayed on the display module 40 is projected by the projection module 50 in the form of an optical signal toward the beamsplitter 15 to be reflected by the beamsplitter 15 toward the rear end of the visible light path to eventually form an image on the image plane at the rear end of the visible light path; when the visible light mode and the infrared mode are simultaneously turned on, the projection module 50 projects the infrared image displayed on the display module 40 toward the beamsplitter 15 to fuse with the visible light image formed on the image plane at a rear end of the visible light passageway 11. Optionally, the projection module 50 comprises a projection condenser lens corresponding to the display module 40 and multiple projection reflection mirrors located at one side of the projection condenser lens that is distant from the display module 40. With the optical signal of the image displayed on the display module 40 being condensed by the projection condenser lens, the multiple projection reflection mirrors, collaborating with each other, changes a projection path of the optical signal of the image transmitting from the projection condenser lens to reflect the optical signal of the image displayed on the display module 40 toward the beamsplitter 15, thereby fulfilling the purpose of the projection module 50 projecting the image displayed on the display module 40 toward the beamsplitter 15.

In the above, the multi-mode handheld optical device is provided, in the interior thereof, with an infrared passageway 31, and the infrared passageway 31 and the visible light passageway 11 are parallel to each other. The visible light of the target field of view transmits through the visible light entry window 12 into the visible light passageway 11 and is subjected to operation of splitting and combining by the beamsplitter 15 to have the visible light transmitting therethrough at a predetermined ratio to then form an image on the image plane at the rear end of the visible light passageway 11; the infrared light of the target field of view transmits into the infrared passageway 31 and is converted into a clear infrared image for outputting to be displayed on the display module 40, and with the arrangement of the projection module 40, the optical signal of the infrared image is projected toward the beamsplitter 15 to be subjected to operation of splitting and combining by the beamsplitter 15 so as to have the optical signal of the infrared image, after transmitting therethrough, forming an image again on the image plane at the rear end of the visible light passageway 11, and as such, the imaging light path for the infrared assembly 30 collecting the infrared light to formation of the infrared image on the display module 40 and the imaging light path for the visible light assembly 10 collecting the visible light to formation of the visible light image on the image plane at the rear end of the visible light path are independent of each other. When the infrared mode and the visible light mode are simultaneously turned on, due to the arrangement of the projection module 40 and the beamsplitter 15, the infrared image displayed on the display module 40 is projection to fusion with the visible light image on the image plane, and the collaboration of the projection module 40 and the beamsplitter 15 fulfills a shared light path arrangement for the fusion light path through which the infrared image is fused to the image plane at the rear end of the visible light path and the portion of the imaging light path of the visible light image from the beamsplitter 15 to the image plane. A human eye can directly observe the image on the image plane by means of the ocular lens group 18 at the rear end of the visible light passageway 11.

In the above, the distance information measured by the laser assembly 20 is displayed on the display module 40, and due to the arrangement of the projection module 40 and the beamsplitter 15, when the laser ranging mode is turned on, the distance information displayed on the display module 40 can be made, through image projecting, fused with the visible light image on the image plane so that an image with distance information can be directly observed at the rear end of the visible light path. It is noted that the image with distance information is different according to the specific mode of the multi-mode handheld optical device is currently turned on. For example, when the laser ranging mode and the visible light mode are simultaneously turned on, a visible light image with distance information can be directly observed at the rear end of the visible light path; when the laser ranging mode and the infrared mode are simultaneously turned on, an infrared image with distance information can be directly observed at the rear end of the visible light path; when the laser ranging mode is turned on in combination with the infrared mode and the visible light mode, a two-light fusion image with distance information can be directly observed at the rear end of the visible light path.

In the above, operation modes of the multi-mode handheld optical device may include: visible light mode, laser ranging mode, infrared mode, visible light ranging mode, infrared ranging mode, two-light fusion mode, two-light fusion ranging mode. The visible light mode is that the laser assembly 20 and the infrared assembly 30 are both not in operation, and observation and target sighting are performed only with the visible light assembly 10.

The visible light ranging mode is that the infrared assembly 30 is not in operation, and the distance information measured with the laser assembly 20 is displayable on the display module 40. Human eyes may observe, through the ocular lens group 18 of the visible light assembly 10, not only a visible light detection target, and may also read the distance of the detection target on the display module 40. Optionally, the visible light ranging mode is that the infrared assembly 30 is not in operation, the distance information measured with the laser assembly 20 is displayed on the display module 40, and the distance information displayed on the display module 40 is projected by means of the projection module 50 and the beamsplitter 15 to the image plane of the visible light image to have the distance information superimposed on the image of a visible light detection target. Human eyes may directly observe, through the ocular lens group 18 of the visible light assembly 10, a visible light detection target with distance information.

The infrared mode is that the visible light assembly 10 and the laser assembly 20 are both not in operation, the infrared image outputted from the infrared assembly 30 is displayed on the display module 40, and the infrared image displayed on the display module 40 is projected by means of the projection module 50 and the beamsplitter 15 to the image plane at the rear end of the visible light passageway 11. Human eyes may observe, through the ocular lens group 18, an infrared detection target.

The infrared ranging mode is that the visible light assembly 10 is not in operation, the infrared image outputted from the infrared assembly 30 is displayed on the display module 40, and the distance information measured with the laser assembly 20 is also displayed on the display module 40. The infrared image displayed on the display module 40 and superimposed with the distance information is projected by means of the projection module 50 and the beamsplitter 15 to the image plane of visible light image. Human eyes may directly observe, through the ocular lens group 18 of the visible light assembly 10, an infrared detection target with distance information.

The two-light fusion mode is that the laser assembly 20 is not in operation, the infrared image outputted from the infrared assembly 30 is displayed on the display module 40, and the infrared image displayed on the display module 40 is projected by means of the projection module 50 and the beamsplitter 15 to the image plane at the rear end of the visible light passageway 11 to fuse with the image formed with a visible light transmitting through the beamsplitter 15 on the image plane. Human eyes may directly observe, through the ocular lens group 18 of the visible light assembly 10, the fused image, wherein the infrared image may make displaying with high brightness for regions of intense heat to allow the user to better identify and sight at the target.

The two-light fusion ranging mode is that the visible light assembly 10, the infrared assembly 30, and the laser assembly 20 are all put into operation. The infrared image outputted from the infrared assembly 30 is displayed on the display module 40, the distance information measured with the laser assembly 20 is also displayed on the display module 40, and the infrared image that is displayed on the display module 40 and superimposed with the distance information is projected by means of the projection module 50 and the beamsplitter 15 to the image plane at the rear end of the visible light passageway 11, and then to be fused with the visible light image that is formed on the image plane by a visible light transmitting through the beamsplitter 15. Human eyes may directly observe, through the ocular lens group 18 of the visible light assembly 10, a two-light fusion image with distance information.

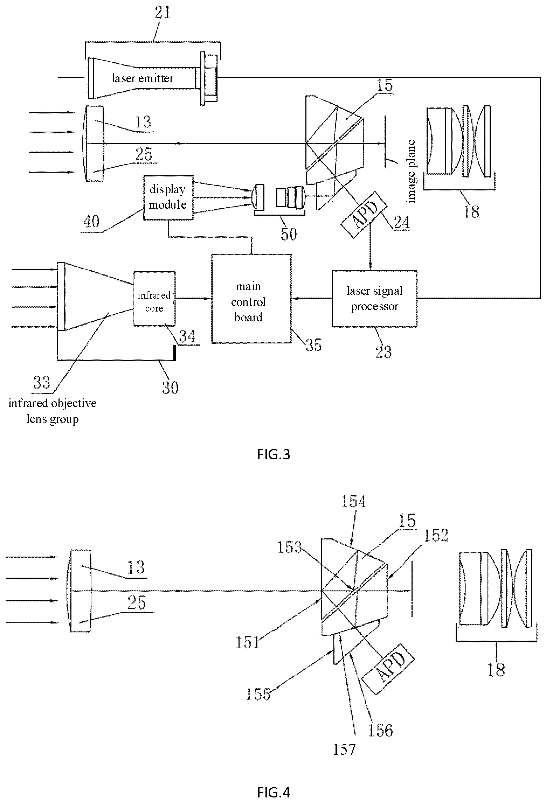

Optionally, referring to FIG. 3, the infrared assembly 30 comprises an infrared entry window 32 and an infrared core 34 that are sequentially arranged in an infrared light path. The infrared core 34 is connected to the display module 40. An infrared objective lens group 33 is arranged at the site of the infrared entry window 32 to collect an infrared light of the target field of view. The infrared core 34 converts the infrared light into an electrical signal that is transmitted to the display module 40 to display an infrared image corresponding thereto. The infrared image is projected by means of the projection module 50 in the form of an optical signal transmitting into the beamsplitter 15 and reflected by the beamsplitter 15 toward the rear end of the visible light path. In this, the infrared entry window 32 and the visible light entry window 12 are arranged side by side at a front end of the multi-mode handheld optical device, where the visible light objective lens group 13 is set at a location corresponding to the visible light entry window 12 and the infrared objective lens group 33 is set at a location corresponding to the infrared entry window 32, thus to respectively collect and converge more visible light and more infrared light transmitting from the target field of view toward the visible light entry window 12 and the infrared entry window 32. In an optional specific embodiment, the multi-mode handheld optical device further comprises a main control board 35 that is separately connected with the infrared assembly 30, the laser assembly 20, and the display module 40. The main control board 35 receives the electrical signal that is converted from the infrared light and is transmitted from the infrared assembly 30, and/or receives the distance information transmitted from the laser assembly 20, and controls the display module 40 to display the corresponding infrared image and/or distance information. Optionally, the main control board 35 is provided with an image processing chip and a display connection port. The display module 40 is electrically connected with the display connection port, and the image processing chip functions to process the infrared image based on a currently applied image processing mode. The image processing chip may include a series of image processing algorithms, such as image processing algorithms for enhancing, scaling, and noise reducing of the infrared image, and different ones of the image processing algorithms respectively correspond to different ones of image processing modes. The housing of the multi-mode handheld optical device may be provided with image mode buttons for selection among the image processing modes, and the user may operate the image mode buttons to select a desired mode for processing the infrared image. The main control board 35 may be connected by a flexible flat cable to the display connection port and the display module 40 in order to output the infrared image that is made clearer through processing by the image processing algorithms to display on the display module 40. The main control board 35 may be provided with a control circuit that controls operation of the laser assembly 20, receives a request for laser range finding, and controls the laser assembly 20 to emit a pulsed laser to fulfill range finding.

In some embodiments, the laser assembly 20 comprises a laser emitting module and a laser receiving module. The laser emitting module comprises a laser emitter 21, and the laser receiving objective lens 25 belongs to the laser receiving module. The laser receiving module further comprises a photoelectric detector 24 arranged at one side of the beamsplitter 15 and a laser signal processor 23 connected with the photoelectric detector 24. When the laser ranging mode is turned on, the laser emitter 21 emits a pulsed laser toward the detection target, and a laser reflected back by the detection target is collected by the laser receiving objective lens 25 located at the front end of the visible light path, and then to transmit along the visible light path toward the beamsplitter 15 to be reflected by the beamsplitter 15 toward the photoelectric detector 24. The photoelectric detector 24 converts the laser reflected back from the detection target into an electrical signal transmitting to the laser signal processor 23, so as to obtain the distance information with respect to the detection target by means of calculation performed with the laser signal processor 23. The laser signal processor 23 is electrically connected with the main control board 35. The laser receiving objective lens 25 is arranged at the site of the visible light entry window 12. The laser signal processor 23 calculates the distance information with respect to the detection target according to the emitting time when the laser emitter 21 emits the pulsed laser, the receiving time when the laser receiving objective lens 25 receives the laser that is reflected back, and the laser propagation speed. The main control board 35 transmits the distance information, by way of the display connection port, to the display module 40 and controls the display module 40 to display the distance information. In this, the photoelectric detector 24 can be an avalanche photo diode (APD), and the laser receiving objective lens 25 is arranged at a location corresponding to the visible light entry window 12 to realize the shared light path arrangement for the laser receiving light path and the visible light path. In addition, the arrangement of the beamsplitter 15 in the visible light passageway 11 realizes separation of the visible light and the laser, and the separated laser is converged by the photoelectric detector 24 located at one side of the beamsplitter 15, and the photoelectric detector 24 outputs a return signal that is subjected to amplification and signal processing to be then fed to the laser signal processor 23 to allow the laser signal processor 23 to calculate the distance information of the detection target. Optionally, the laser signal processor 23 may comprise a counter and a laser signal processing circuit. The counter carries out counting according to the return signal outputted from the photoelectric detector 24 and transmits the counting information to the laser signal processing circuit, in order to calculate the distance information by means of the laser signal processing circuit and to transmit the distance information to the main control board 35 to allow the main control board 35 to control the display module 40 to display the distance information. In an optional specific embodiment, the housing of the multi-mode handheld optical device is provided with laser buttons that control emission of the pulsed laser from the laser emitter 21. The main control board 35, based on the operation of the laser buttons by the user, receives a ranging request signal and controls the laser assembly 20 to turn on the function of laser range finding according to the ranging request signal.

Optionally, the multi-mode handheld optical device further comprises a main housing 60 in which the visible light assembly 10, the laser assembly 20, and the infrared assembly 30 are received. The visible light passageway 11 and the infrared passageway 31 are arranged respectively at upper and lower sides in a parallel manner in an interior of the main housing 60 in a height direction of the main housing 60. The visible light passageway 11 receives the visible light assembly 10 to correspondingly arrange therein, and the infrared passageway 31 receives the infrared assembly 30 to correspondingly arrange therein. A laser emitting window 220 is arranged between the visible light passageway 11 and the infrared passageway 31 at a front side of the main housing 60. In this, the length of the infrared passageway 31 may be less than a length of the visible light passageway 11, and the visible light entry window 12 and the infrared entry window 32 are arranged on a front end surface of the main housing 60 as being aligned in a vertical direction and separated from each other. The laser emitting window 220 is located between the visible light entry window 12 and the infrared entry window 32, and is located at the same straight line with the visible light entry window 12 and the infrared entry window 32. In the instant embodiment, the visible light assembly 10, the laser assembly 20, and the infrared assembly 30 are integrated together by means of the main housing 60. The front end surface of the main housing 60 is provided, in sequence in the vertical direction, with the visible light entry window 12, the laser emitting window 220, and the infrared entry window 32. The interior of the main housing 60 forms the visible light path along which visible light travels, the infrared light path along which infrared light travels and forms an image, and the laser receiving light path that shares light path with the visible light path.

The beamsplitter 15 is composed of a Benhain prism and a half-penta prism, and the visible light path is re-used as the laser receiving light path, and visible light and laser are separated by means of the beamsplitter 15 composed of the Benhain prism and the half-penta prism. Referring to FIGS. 4 and 5, the Benhain prism comprises, arranged in sequence, an incident surface 151, a first edge reflecting surface 154, an exiting surface 152, a second edge reflecting surface 157, and intermediate reflecting surfaces 153 located between the incident surface 151 and the exiting surface 152 and arranged oblique. In this, the incident surface 151 faces an incident direction of visible light, and the exiting surface 152 is parallel with the incident surface 151 and located at the rear end of the visible light path, and the first edge reflecting surface 154 is connected to the half-penta prism. The half-penta prism is arranged on one side of the Benhain prism that is adjacent to the infrared assembly 30, and the half-penta prism comprises a light receiving surface 155 facing the display module 40 and a light emitting surface 156 obliquely connected between the light receiving surface 155 and a corresponding side of the Benhain prism. In an optional, specific embodiment, the Benhain prism comprises a first prism and a second prism separated from each other by an air gap, and the intermediate reflecting surfaces 153 includes two surfaces that are spaced from each other and define the air gap, and the incident surface 151, the first edge reflecting surface 154, and one of the intermediate reflecting surfaces 153 are surfaces of the first prism, and the exiting surface 152, the second edge reflecting surface 157, and another one of the intermediate reflecting surfaces 153 are surfaces of the second prism. In different operation modes of the multi-mode handheld optical device, the imaging light paths of the visible light assembly 10, the laser assembly 20, and the infrared assembly 20 are independent of one another, while when multiple ones of the operation modes are activated in a combined manner, the imaging light paths corresponding thereto are combined by means of the beamsplitter 15 so as to achieve the purposes of shared light path arrangement and combination of multiple modes.

For the imaging light path of the visible light assembly 10, as shown in FIG. 4, the incident direction of visible light is the same as the incident direction of a laser reflected back from the detection target, and the visible light entering the visible light passageway 11 gets incident on the incident surface 151 of the beamsplitter 15, traveling from the incident surface 151 into the Benhain prism and transmitting through the Benhain prism to exit from the exiting surface 152 so as to form a visible light image at the rear end of the corresponding visible light path. In an illustrative example, the visible light that travels through the incident surface 151 into the Benhain prism is refracted at the incident surface 151 to travel toward the first edge reflecting surface 154 or the second edge emitting surface 157, and after repeatedly reflected among the first edge reflecting surface 154, the intermediate reflecting surface 153, and the second edge reflecting surface 157, a predetermined ratio of the visible light transmits through the exiting surface 152 of the Benhain prism toward the rear end of the visible light path. In this, the predetermined ratio is set according the desired brightness for the visible light image, such as the predetermined ratio being 60%.

For the imaging light path of the infrared assembly 20, as shown in FIG. 5, the infrared light gets into the infrared passageway 31 is converted by the infrared core 34 into an electrical signal that is fed to the display module 40, and the display module 40 displays a corresponding infrared image according to the electrical signal. The infrared image displayed on the display module 40, as being subjected to projection by the projection module 50, travels in the form of an optical signal to transmit from the light receiving surface 155 of the half-penta prism to the light emitting surface 156, and is reflected by the light emitting surface 156 toward the Benhain prism to enter the Benhain prism from the second edge reflecting surface 157 thereof, and then to be then reflected by the intermediate reflecting surface 153 of the Benhain prism to transmit from the exiting surface 152 toward the rear end of the visible light path. For easy description, the section of light path along which the infrared image of the display module 40 is acted upon by the projection module 50 and the beamsplitter 15 to transmit toward a human eye observation site at the rear end of the visible light path is referred to as a fusion light path.

For the ranging light path of the laser assembly 30, referring jointly to FIGS. 4 and 5, the laser receiving objective lens 25 collects the laser reflected back by the detection target, and the laser gets incident to the incident surface 151 of the beamsplitter 15, and this part of light path is referred to as the laser receiving light path, which is coincident with the visible light path as shown in FIG. 4. The laser that transmits along the visible light path gets into the Benhain prism through the incident surface 151, and is then reflected multiple times among the intermediate reflecting surface 153, the first edge emitting surface 154, and the incident surface 151 to direct toward the half-penta prism and exits from the light emitting surface 156 of the half-penta prism to be applied to calculation of the distance information. In this, the laser, after being separated by the beamsplitter 15, is refracted at the incident surface 151 to then undergo multiple times of reflection in the interior of the Benhain prism and after that is transmitted to the second edge reflecting surface 157 that is adjacent to the half-penta prism, finally to transmit through the half-penta prism and travels from the light emitting surface 156 of the half-penta prism toward the photoelectric detector 24. The laser is subjected to collection and processing by the photoelectric detector 24 and the laser signal processor 23, for use in the calculation of the distance information that is displayed on the display module 40. Subsequently, the distance information displayed on the display module 40 is subjected to projection by the projection module 50 to transmit, in the form of an optical signal, from the light receiving surface 155 of the half-penta prism to the light emitting surface 156, and is reflected by the light emitting surface 156 to the Benhain prism to get into the Benhain prism from the second edge reflecting surface 157 thereof, and is then reflected by the intermediate reflecting surface 153 of the Benhain prism to travel from the exiting surface 152 toward the rear end of the visible light path, this part of light path being coincident with the fusion light path of the infrared image. As such, the ranging light path of the laser assembly 30 is arranged to have a part thereof coincide with the visible light assembly 10 and a part coincide with the infrared assembly 20, so that the compactness of the entire structure of the multi-mode handheld optical device can be greatly enhanced, while multiple modes are realizable.

Optionally, a lens cap 19 including a light filter is arranged at an outside of the front end of the visible light path, and the lens cap 19, when covering the visible light passageway 11, may filter off visible light while admitting a laser to pass. With the arrangement of the lens cap 19 including the light filter, when the lens cap 19 is closed, visible light is not allowed to transmit through the visible light entry window 12 into the visible light passageway 11, and as such, closing the lens cap 19 may make the visible light mode of the multi-mode handheld optical device turned off, but the user, under this condition, is still allowed to independently turn on the laser ranging mode by operating the laser buttons, or to independently turn on the infrared mode by operating a power switch of the multi-mode handheld optical device, or to simultaneously activate the laser ranging function and the infrared ranging mode of the infrared function by operating the laser buttons and the power switch in order to suit the needs in different application scenarios. When it is desired to turn on the visible light mode, the user can directly open the lens cap 19.

The monocular multi-mode handheld optical device provided in the embodiment of the application offers at least the following advantages.

Firstly, the visible light assembly 10, the infrared assembly 30, and the laser assembly 20 are integrated together as one piece, to form a multi-mode handheld optical device suitable for various application scenarios, wherein the laser receiving objective lens 25 and the visible light objective lens group 13 being arranged to both correspond to the visible light entry window 12, allows for realization of the shared light path arrangement for the visible light path and the laser receiving light path; and the beamsplitter 15 being arranged in the visible light path allows the visible light and the laser in the same light path to be separated from each other, so as to realize keeping the laser ranging function and the visible light imaging function independent of each other.

Visible light of the target field of view is collected by the visible light objective lens group 13 through the visible light entry window 12 to get into the visible light passageway 11, and the visible light travels along the visible light passageway 11 and is subjected to splitting and combining by the beamsplitter 15, thus to have a predetermined ratio of the visible light transmitting through the beamsplitter 15 to form an image on the image plane at the rear side. The laser assembly 20 emits a pulsed laser toward a detection target by means of the laser emitter 21, and a laser reflected back by the detection target is collected by the laser receiving objective lens 25 through the visible light entry window 12, then to get into the visible light passageway 11 and is subjected to reflection and refraction by the beamsplitter 15 to get split into a laser that is collected by the APD for calculation the distance information of the detection target that is then displayed on the display module 40. Infrared light is collected by the infrared objective lens group 33 through the infrared entry window 32 to get into the infrared passageway 31, and the infrared light travels along the infrared passageway 31 and is converted by the infrared core 34 into an electrical signal, and a highly clear infrared image is formed based on the electrical signal and displayed on the display module 40.

The multi-mode handheld optical device can be a multi-spectrum fusion monocular telescope, which can be downgradable in the daytime to operate as a visible light telescope for observing and searching a target, and can also be activated in a fusion mode to highlight a target in a jungle to enhance the capability of searching; and can also be operated with an infrared mode in the nighttime for observing and searching, and for locking on a distance of a target, so as to realize a telescope for truely all-day observation and search.

Secondly, the multi-mode handheld optical device supports multiple operation modes: the visible light mode, the infrared mode, the laser ranging mode, the two-light fusion mode, the visible light ranging mode, and the two-light fusion ranging mode, and the user may select a currently operation mode for the multi-mode handheld optical device according to the needs for actual applications.

In case that the multi-mode handheld optical device is not turned on and is not powered, the laser assembly 20 and the infrared assembly 30 are both not in operation, while the visible light assembly 10 may operate independently and the user may observe a target through the eyepiece.

Thirdly, the visible light passageway 11 is provided, on the front end thereof, with the lens cap 19 that includes a light filter. Therefore, in the infrared mode or the infrared ranging mode, the lens cap 19 can be closed, and under such a condition, the range finding function of the laser assembly 20 is maintained and the laser ranging information and the infrared thermal image can be displayed on the display module 40, and the user may observe, through the eyepiece, the infrared image or the infrared image that carries the laser ranging information.

Fourthly, the beamsplitter 15 is composed of a Benhain prism and a half-penta prism, and the beamsplitter 15 fulfills light splitting and combining so that when visible light and laser share the visible light passageway 11, a predetermined ratio of the visible light is admitted to transmit therethrough to form an image on the image plane, and the laser is reflected, after transmitting therethrough, toward a detector at one side of the beamsplitter 15.

Fifthly, the visible light assembly 10 is selected as a visible light telescope of different specifications having fixed magnification, continuously variable magnification, or both fixed and continuously variable magnification, and combination of the laser assembly 20 and the infrared assembly 30 of shared light path arrangement with the visible light telescope of different specifications, can realize accurate target fusion to enhance the capability of target highlighting so as to strengthen the capability of searching to thereby suit the needs of various users.

Referring to FIGS. 6-8, an embodiment of the application provides a monocular multi-mode handheld optical device with continuously magnification variable capability. The handheld optical device can be a handheld telescope, or other optical devices, such as a sighting device that enables observation a detection target made at a distance. Here, a display module arranged at one side of a visible light path, and an objective lens group comprising a visible light objective lens group, and a visible light assembly 10 comprises a monocular visible light assembly that includes one visible light imaging module is taken as an example. The monocular multi-mode handheld optical device with continuously magnification variable capability comprises a visible light assembly 10, a laser assembly 20, an infrared assembly 30, and a display module 40 separately connected with the laser assembly 20 and the infrared assembly 30. The visible light assembly 10 comprises a visible light objective lens group 13, a beamsplitter 15, and a zoom lens group 17 sequentially arranged in the visible light path. When a visible light mode is turned on, visible light of a target field of view is received by the visible light objective lens group 13 and transmits along the visible light path toward a first light receiving surface of the beamsplitter 15, and at least a portion of the visible light transmits through the first light receiving surface of the beamsplitter 15 and is subjected to magnification adjustment by the zoom lens group 17, to form a visible light target-field-of-view image that includes the detection target on an image plane at a rear end of the visible light path. For easy distinction and description, the image plane at the rear end of the visible light path will be referred to as a rear end image plane 14. A human eye observation site of the multi-mode handheld optical device is located in the visible light path behind the rear end image plane 14, and a user observes the visible light target-field-of-view image on the rear end image plane 14 from the human eye observation site. When a laser ranging mode is turned on, the laser assembly 20 functions to emit a laser pulse toward a detection target, and obtains, according to a laser reflected back by the detection target, distance information of the detection target, and transmits the distance information to the display module 40 to displayed thereon. When an infrared mode is turned on, the infrared assembly 30 collects an infrared image information from the target field of view for transmitting to the display module 40, and a corresponding infrared image is displayed on the display module 40. The display module 40 is arranged at one side of the beamsplitter 15, and the distance information and/or the infrared image displayed on the display module 40 is transmitted, in the form of an optical signal, to a second light receiving surface of the beamsplitter 15 and is reflected by the second light receiving surface of the beamsplitter 15 to the zoom lens group 17, after that is to be subjected to magnification adjustment to reach the rear end image plane 14 of the visible light path to form an infrared target-field-of-view image.

In the above, the display module 40 has functions of displaying image and text information. The detection target refers to an observation object located in the target field of view, such as an animal in a hunting scenario. The visible light assembly 10 is an optical component combination that collects visible light in the target field of view to form a corresponding visible light image, in an example where the multi-mode handheld optical device is a monocular handheld telescope, the visible light assembly 10 can be a visible light telescope component combination of the monocular handheld telescope. In this, the human eye observation site is arranged at the rear end of the visible light path, and is specifically arranged behind the rear end image plane 14 to allow a user to observe a target-field-of-view image formed on the rear end image plane 14 from the human eye observation site. The detection target is included in the target-field-of-view image, and the target-field-of-view image is one of a visible light target-field-of-view image, an infrared target-field-of-view image, and a fused target-field-of-view image formed by the fusion of visible light and infrared light.

In some embodiments, the visible light assembly 10, the laser assembly 20, and the infrared assembly 30 may independently and respectively fulfill the visible light mode, the infrared mode, and the laser ranging mode, and it is also possible to simultaneously turn on the visible light mode, the infrared mode, and the laser ranging mode to realize a multi-mode fusion handheld optical device.

In some embodiments, the visible light assembly 10 comprises, sequentially arranged in the visible light path, a visible light objective lens group 13, a beamsplitter 15, and a zoom lens group 17 arranged rearwards of the beamsplitter 15. The beamsplitter 15 can specifically be a beam splitting prism, and comprises a first light receiving surface and a second light receiving surface that are inclined with respect to the visible light path and opposite to each other, wherein the first light receiving surface is a surface that is closer to the visible light objective lens group 13, while the second light receiving surface is a surface that is closer to the zoom lens group 17. Visible light travels to the first light receiving surface of the beamsplitter 15, and transmits through the first light receiving surface to be subsequently subjected to magnification adjustment by the zoom lens group 17 to then form an image on the rear end image plane 14. Further, the display module 40 is arranged at one side of the beamsplitter 15 to display corresponding distance information of the laser assembly 20 and/or to display a corresponding infrared image of the infrared assembly 30, and then to have the distance information and/or the infrared image reflected, in the form of an optical signal, by the second light receiving surface of the beamsplitter 15 toward the zoom lens group 17 to be subjected to magnification adjustment to finally form an image on the rear end image plane 14 of the visible light path. Obviously, in the multi-mode handheld optical device with continuously magnification variable capability according to some embodiments of the application, the visible light and the infrared light can be fused together at the second light receiving surface of the beamsplitter 15 and can be, after being fused together, to be simultaneously subjected to magnification adjustment by the zoom lens group 17 for enlargement or reduction, thereby fulfilling fusion of different spectra at a relatively low magnification and achieving enlargement or reduction during the course of continuously magnification variation. Thus, the multi-mode handheld optical device with continuously magnification variable capability provided in the embodiment of the application has a higher visual magnification rate, can obtain better-quality visible light and infrared light fusion images at a closer fusion distance, can reduce the light path distance of the multi-mode handheld optical device, can reduce the size of the multi-mode handheld optical device, and allow a user to accurately lock on a detection target.

In the multi-mode handheld optical device provided in the embodiment of the application, the fusion of the distance information of the laser assembly 20 and the visible light image of the visible light assembly 10, and the fusion of the infrared image of the infrared assembly 30 and the visible light image of the visible light assembly 10 share a same fusion passageway. The fusion passageway comprises the display module 40, the beamsplitter 15, and the zoom lens group 17, so as to better achieve the purpose of making the structure of the multi-mode handheld optical device compact and also to enhance the capability of highlighting the detection target for easy observation.

Further, in the multi-mode handheld optical device provided in the embodiment of the application, using the beamsplitter 15 to split an optical signal corresponding to the displayed content of the display module 40 requires no use of a projection system to project the displayed content of the display module 40, and this is favorable for structure compactness of the multi-mode handheld optical device. Further, moving the zoom lens group 17 along a visible light axis to make adjustment for enlargement and reduction of the visible light and the infrared light transmit therethrough can help improve comfortableness of the user for observing the infrared image information.

In some embodiments, the laser assembly 20 comprises a laser emitter 21, a laser receiving objective lens 25 arranged at one side of the beamsplitter 15, a photoelectric detector 24, and a laser signal processor 23 connected to the photoelectric detector 24. The laser emitter 21 functions to emit a laser pulse toward a detection target. In some embodiments, to simplify the structure of the multi-mode handheld optical device, the laser assembly 20 may share a part of the light path with the visible light assembly 10. For example, a laser reflected back by the detection target may be received by the visible light objective lens group 13, then to transmit along the visible light path toward the beamsplitter 15 to be reflected by the first light receiving surface of the beamsplitter 15 toward the laser receiving objective lens 25, namely in some embodiments, the laser assembly 20 and the visible light assembly 10 share the visible light objective lens group 13 and the beamsplitter 15. In other embodiments, the laser reflected back by the detection target may be directly received by the laser receiving objective lens 25. The laser receiving objective lens 25 functions to converge the laser reflected by the beamsplitter 15 to the photoelectric detector 24. The photoelectric detector 24 functions to convert the laser into a return electrical signal and feed the return electrical signal to the laser signal processor 23. The laser signal processor 23 functions to acquire the distance information with respect to the detection target according to the return electrical signal for transmission to the display module 40. Specifically, after the return electrical signal is received by the photoelectric detector 24, the return electrical signal is further magnified and fed into a counting circuit for counting, and after the counting, counting information that represents the distance information is fed to the laser signal processor 23, to allow the laser signal processor 23 to calculate the distance information of the detection target according to the counting information and transmit the distance information to the display module 40 for displaying.

In some embodiments, the laser signal processor 23 specifically functions to calculate the distance information with respect to the detection target according to the emission time when the laser emitter 21 emits the pulsed laser, the receiving time when the photoelectric detector 24 receives the reflected back laser, and the laser propagation speed. Specifically, the return electrical signal outputted from the photoelectric detector 24 is subjected to amplification and signal processing to be then fed to the laser signal processor 23 to allow the laser signal processor 23 to calculate the distance information of the detection target. Optionally, the laser signal processor 23 may comprise a counter and a laser signal processing circuit. The counter completes counting according to the return electrical signal outputted from the photoelectric detector 24 and feeds the counting information to the laser signal processing circuit, in order to calculate the distance information by means of the laser signal processing circuit.

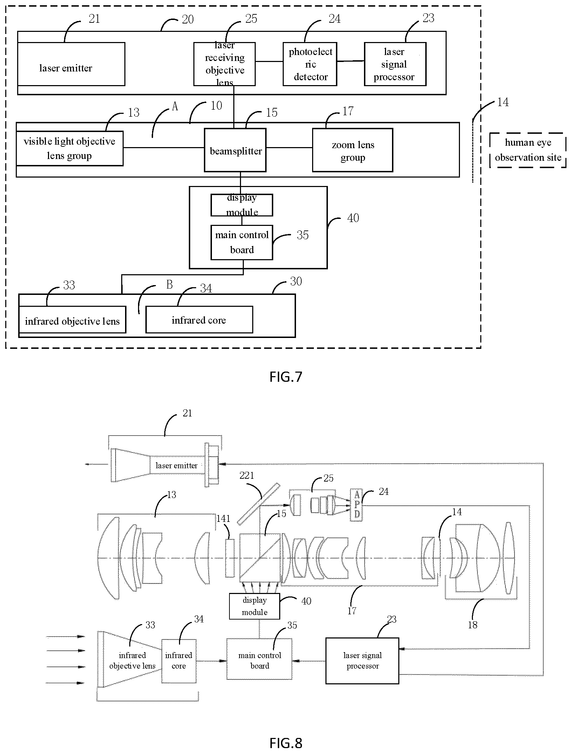

Referring to FIG. 7, in some embodiments, the infrared assembly 30 comprises, sequentially arranged along the infrared light path, an infrared objective lens group 33 and an infrared core 34 connected to the display module 40. The infrared objective lens group 33 collects infrared light of the target field of view and transmits the infrared light to the infrared core 34. The infrared core 34 converts the infrared light into an infrared electrical signal representing an infrared image for transmission to the display module 40. The display module 40 receives the infrared electrical signal transmitted from the infrared core 34 and displays an infrared image corresponding thereto, and the infrared image gets incident, in the form of an optical signal, onto the second light receiving surface of the beamsplitter 15 and is reflected by the second light receiving surface of the beamsplitter 15 to the zoom lens group 17 to be subjected to magnification adjustment to then reach the rear end image plane 14 of the visible light path.

Referring to FIG. 7, in some embodiments, the display module 40 comprises a main control board 35 and a display screen connected to the main control board 35. The main control board 35 is connected separately to the laser assembly 20 and the infrared assembly 30, and the display screen is arranged at one side of the beamsplitter 15. The main control board 35 receives distance information supplied from the laser assembly 20 and/or infrared image information supplied from the infrared assembly 30 and controls the display screen to display corresponding distance information and/or infrared image.

As shown in FIG. 7, in some embodiments, the laser signal processor 23 of the laser assembly 20 and the infrared core 34 of the infrared assembly 30 are separately connected to the main control board 35 of the display module 40. The main control board 35 receives the infrared electrical signal supplied from the infrared core 34 and/or the distance information supplied from the laser signal processor 23, and controls the display screen to display corresponding infrared image and/or distance information. Optionally, the main control board 35 is provided with an image processing chip and a display connection port. The display screen is electrically connected to the display connection port. The image processing chip carries out, according to the current image processing mode, processing on the infrared image represented by the infrared electrical signal. The image processing chip may comprise a series of image processing algorithms, such as image processing algorithms for enhancing, scaling, and noise reducing of the infrared image, and different ones of the image processing algorithms respectively correspond to different ones of image processing modes. The main control board 35 may be connected by a flexible cable to the display connection port and the display screen in order to output the infrared image that is made clearer through processing by the image processing algorithms to display on the display screen. The main control board 35 may be provided with a control circuit that controls operation of the laser assembly 20, receives a request for laser range finding, and controls the laser assembly 20 to emit a pulsed laser to fulfill range finding.

Referring to FIG. 8, in some embodiments, the laser receiving module comprises a reflection mirror 221 arranged at one side of the beamsplitter 15 and a laser receiving objective lens 25 arranged in a reflection path of the reflection mirror 221. The reflection mirror 221 receives a laser reflected from the first light receiving surface of the beamsplitter 15 for reflection toward the laser receiving objective lens group. The laser receiving objective lens 25 converges the laser received thereby onto the photoelectric detector 24. In the instant embodiment, the laser assembly 20 re-uses the visible light objective lens group 13 and the beamsplitter 15 of the visible light assembly 10, and this is favorable for compactness of light path structure of the multi-mode optical device. In some embodiments, the photoelectric detector 24 can be an avalanche photo diode (APD) detector.

Referring to FIG. 8, in some embodiments, the visible light assembly 10 further comprises an ocular lens group 18 arranged rearwards of the rear end image plane 14 in the visible light path, and human eyes may observe a visible light target-field-of-view image on the rear end image plane 14 through the ocular lens group 18. Further, in some embodiments, the visible light assembly 10 further comprises a front end image plane 141 arranged between the visible light objective lens group 13 and the beamsplitter 15, and visible light transmits through the visible light objective lens group 13 to fulfill primary image forming on the front end image plane 141.

The following provides a description of the operation of a multi-mode handheld optical device with continuously magnification variable capability according to some embodiments, with reference to FIG. 8.

When the infrared mode is turned-on, meaning the infrared assembly 30 is in an activated state, infrared light (thermal radiation) of the target field of view passes through the infrared objective lens group 33 of the infrared assembly 30 and is then collected by an infrared detector of the infrared core 34 of the infrared assembly 30, then to be processed through a series of image algorithms of the infrared core 34 for conversion into a clear infrared image to be outputted to display on the display screen, this forming the infrared light path. In some embodiments, the infrared core 34 only converts the infrared light of the target field of view into an infrared electrical signal, and the main control board 35, based on the infrared electrical signal, forms an infrared image corresponding thereto and subjects the infrared image to a series of image processing to be fed to the display screen for displaying. In other embodiments, the infrared core 34 may further convert the infrared electrical signal into the infrared image, and subjects the infrared image to image processing, such as enhancement, by means of a series of image algorithms, to obtain a clear infrared image. The infrared image is transmitted from the main control board 35 to the display screen for displaying.

In FIG. 8, the visible light objective lens group 13, the beamsplitter 15, the zoom lens group 17, and the rear end image plane 14 are sequentially arranged in the visible light path to form the visible light passageway A, and the infrared objective lens group 33 and the infrared core 34 are sequentially arranged in the infrared light path to form the infrared passageway B.

When the laser ranging mode is turned-on, the laser emitter 21 of the laser ranging module 20 emits a compressed laser pulse toward the detection target. The laser reflected back by the detection target is received by the visible light objective lens group 13 of the visible light assembly 10 to transmit to the first light receiving surface of the beamsplitter 15. The first light receiving surface of the beamsplitter 15 reflects the laser return signal to the reflection surface of the reflection mirror 221, and the reflection surface of the reflection mirror 221 reflects the laser to the laser receiving objective lens 25, so that the laser receiving objective lens 25 converges and transmits the laser to the APD detector. The APD detector, upon detecting the laser, converts it into a return electrical signal, and the return electrical signal is shaped and transmitted to a counter to provide counting information, and the laser signal processor 23 may acquire the distance information according to the counting information. In this, the laser reflected back by the detection target, after passing through the visible light objective lens group 13, is caused to reflect and transmit at a predetermined ratio, so that a part transmits through the beamsplitter 15 and does not form an image, and a part is reflected one time by the first light receiving surface of the beamsplitter 15 to be then reflected for one time by the reflection mirror 221, thus to reach the laser receiving objective lens group to converge on the APD detector. The APD detector outputs a return electrical signal that is subjected to amplification and signal processing to be fed to the counter to complete counting operation, at the counter to have counting information fed to the laser signal processor 23 to calculate the distance information of the detection target and transmit the distance information through the main control board 35 to the display screen for displaying.

When the visible light mode is turned-on, the visible light objective lens group 13, the beamsplitter 15, the zoom lens group 17, and the ocular lens group 18 make up the visible light passageway A. A parallel visible light beam passes through the visible light objective lens group 13 and reaches the first light receiving surface of the beamsplitter 15, wherein the whole spectrum of the visible light is transmittable through the beamsplitter 15, and is subjected to magnification adjustment in the zoom lens group 17 to then form an image focused on the rear end image plane 14. Human eyes observe, through the ocular lens group 18, the target-field-of-view image on the rear end image plane 14.

The infrared image and the distance information displayed on the display screen 42 are reflected for one time by the second light receiving surface of the beamsplitter 15, to be then subjected to magnification adjustment by the zoom lens group 17 to form an image on the rear end image plane 14. Human eyes may make observation through the ocular lens group 18 to clearly observe the target-field-of-view image.

It is noted that, the other structural arrangement of the multi-mode handheld optical device with continuously magnification variable capability, such as the arrangement including the main housing 60, the spatial relationship of the visible light assembly 10, the laser assembly 20, and the infrared assembly 30 in the main housing 60, and the lens cap 19, may remain the same as those corresponding structural arrangement of the monocular multi-mode handheld optical device of the previous embodiment, and repeated description will be omitted here.

In summary, the monocular multi-mode handheld device with continuously magnification variable capability provided in the embodiment of the application at least includes one of the following effects:
(1) The visible light assembly adopts a continuously magnification variable arrangement to enlarge or reduce the same target for clearly identifying details and contour of the target, allowing accurate locking on the target.
(2) The infrared image can be fused with visible light at a relatively low magnification, and magnification adjustment is carried out after the fusion so as to ensure the quality of the infrared image, make the effect of fusion good, and to simultaneously vary the magnification for the fused images.
(3) Adopting the beamsplitter for splitting and image fusion makes it not necessary to use a projection system, and using the zoom lens group and the ocular lens group ensures observation comfort of the infrared image.

Referring to FIGS. 9-14, an embodiment of the application provides a binocular multi-mode handheld optical device, which can be specifically a binocular handheld telescope.

Currently, available binocular handheld telescopes can be classified as following type:
One of the types is infrared and digital integrated telescope, which is mainly composed of an infrared camera and a digital camera, two display screens, and two ocular lenses. However, devices of such type are inoperable without power supply, and a large number of electronic components are included and servicing is complicated, and they cannot allow for truly observing an actual scene.

One of the types is laser ranging telescope, which is mainly composed of a binocular telescope superimposed with a laser ranging structure that realizes laser emission, reception and ranging calculation. However, the simple superimposed arrangement results in an extremely large size of the monocular handheld telescope products, and this affects portability.

One of the types is a dual-spectrum telescope, which is mainly composed of a visible-light telescope and an infrared telescope, wherein the visible-light telescope is composed of a visible-light objective lens and a first ocular lens, and the infrared telescope is composed of an infrared objective lens, an infrared detector, an OLED display screen, and a second ocular lens. However, for such a dual-spectrum telescope product that supports target observation with both visible light and infrared, visible light images and infrared images are respectively observed with the first and second ocular lenses that are separate, so that not only is the product large in size, but using the left and right eyes to respectively see visible light images and infrared images respectively makes observation comfort poor.

Referring to FIGS. 9-14, an embodiment of the application provides a multi-mode handheld optical device for binocular vision (which will be referred to as multi-mode binocular handheld optical device hereinafter), which comprises a visible light assembly 10, a laser assembly 20, an infrared assembly 30, and a display module 40. A major difference from the monocular multi-mode handheld optical device is that the visible light assembly 10 is a binocular visible light assembly that comprises two visible light imaging modules. The binocular visible light assembly comprises a first visible light imaging module and a second visible light imaging module that are respectively arranged to correspond to two eyes, and for easy distinction and illustration, are respectively referred to as a left-eye image forming module 161 and a right-eye image forming module 162 in the following description. It is noted that in the embodiment of the application, descriptions with respect to the left-eye image forming module 161 and the right-eye image forming module 162 are interchangeable with each other, meaning in the embodiment of the application, the description of the left-eye image forming module 161 can be actually switched to the right-eye image forming module 162, and correspondingly, the description of the right-eye image forming module 162 can be switched to the left-eye image forming module 161. When the first visible light imaging module refers to the left-eye image forming module 161, the second visible light imaging module refers to the right-eye image forming module 162; and oppositely, when the first visible light imaging module refers to the right-eye image forming module 162, the second visible light imaging module refers to the left-eye image forming module 161. The left-eye image forming module 161 and the right-eye image forming module 162 separately receive visible light of a target field of view, and then respectively form visible light images at rear ends of visible light paths respectively corresponding thereto. The infrared assembly 30 is electrically connected with the display module 40, and functions to receive an infrared light of the target field of view for conversion into an infrared image signal to transmit to the display module 40 for displaying a corresponding infrared image. The laser assembly 20 is electrically connected with the display module 40, and comprises a laser emitting module and a laser receiving module arranged to respectively correspond to the two monocular image forming modules 16 respectively, for laser emission and reception. The laser the emitting light path and the laser the receiving light path are respectively coaxial with the visible light paths of the monocular image forming modules corresponding thereto, wherein the laser emitting module functions to emit a pulsed laser toward a detection target, and a laser reflected back by the detection target is received by the laser receiving module for subsequent use to calculate distance information of the detection target, and the distance information is transmitted to the display module 40 for displaying. The distance information and/or the infrared image displayed on the display module 40 is eventually transmitted to the rear ends of the visible light paths to fuse with the corresponding visible light images.

In the above, the detection target refers to an observation object located in the target field of view, such as an animal in a hunting scenario. The binocular visible light assembly refers to an optical component combination that collects visible light in the target field of view to form corresponding visible light images. In an example where the multi-mode binocular handheld optical device is a binocular handheld white light telescope, the binocular visible light assembly can be visible light binocular telescope component of the binocular handheld white light telescope.

Referring jointly to FIGS. 9 and 10, the human eye observation sites can be arranged at the rear ends of the visible light paths of the binocular visible light assembly, and the left-eye image forming module 161 and the right-eye image forming module 162 each comprise an ocular lens (similar to the ocular lens group 18 of the previous embodiment) arranged at the end of the visible light path. The image planes of the visible light images are respectively located frontwards of the ocular lens groups 18, and the left eye and the right eye of a person may respectively observe images on the image planes from the ocular lens groups 18 of the left-eye image forming module 161 and the right-eye image forming module 162. Arranging the laser emitting light path of the laser emitting module and the laser receiving light path of the laser receiving module to be respectively coaxial with the two visible light paths of the binocular visible light assembly, makes the entire product structure more compact and allows for reuse of the visible light imaging structure of the known binocular visible light optical device, simplifying the product design cost.

**In** the above embodiment, the binocular multi-mode handheld optical device comprises the binocular visible light assembly, the infrared assembly 30, and the laser assembly 20, and the laser assembly 20 comprises the laser emitting module and the laser receiving module that are respectively arranged to corresponding to the two monocular image forming modules 16. Arranging the emitting light path and the receiving light path of laser to be respectively coaxial with the two visible light paths of the binocular visible light assembly, makes the structure more compact while multiple modes of the handheld optical device can be realized, and the overall size can be reduced, making the entire device small and easy to carry. **In** addition, the display module 40 is separately connected with the laser assembly 20 and the infrared assembly 30, and the infrared assembly 30 feeds an electrical signal of an infrared image converted from an infrared light to the display module 40 for displaying, and the laser assembly 20 feeds distance information acquired through range finding for a detection target to the display module 40 for displaying, and fusing the distance information and/or the infrared image displayed on the display module 40 with the visible light image formed through the visible light path superimposes the infrared image and/or the ranging information on the visible light image, making the structure compact, and also enhancing the capability of highlighting a target for easy observation.

In some embodiments, the laser receiving module comprises a laser receiving objective lens 25 arranged at a front end of the corresponding visible light path, and a first beamsplitter 15a arranged in the corresponding visible light path to separate a visible light from a laser received by the laser receiving objective lens 25, such that the visible light transmits through the first beamsplitter 15a to form an image on the image plane rearwards of the first beamsplitter 15a. Besides, the laser, upon passing through the first beamsplitter 15a, is reflected by the first beamsplitter 15a to deviate from the visible light path to have the laser separated for being subsequent used in calculation of distance information. As such, by means of the arrangement of the first beamsplitter 15a in the visible light path, the first beamsplitter 15a can be used to separate the laser and the visible light that get incident thereto along the visible light path, allowing the laser receiving light path to share the visible light path of the binocular visible light assembly, while preserving independence of the functions of forming the visible light image and the laser range finding and also simplifying the product structure.

Optionally, the display module 40 is located at an incident side of the first beamsplitter 15a. The distance information and/or the infrared image displayed on the display module 40 gets incident, in the form of an optical signal, onto the first beamsplitter 15a, and is reflected by the first beamsplitter 15a toward the rear end of the visible light path to fuse with the visible light image. Specifically, the display module 40 can be an organic light-emitting diode (OLED) display screen 41 arranged at one side of the visible light path, and corresponds to an incident side of the first beamsplitter 15a. Thus, the distance information and/or the infrared image displayed on the display module 40 gets incident, in the form of an optical signal, onto the first beamsplitter 15a, forming a fusion light path in which the ranging information of the laser assembly 20 and the infrared image formed by the infrared assembly 30 are superimposed to the visible light image of the binocular visible light assembly, namely the fusion light path of the distance information and the infrared image, the fusion light path being parallel with the visible light path. The optical signal of the distance information and/or the infrared image displayed on the OLED display screen 41 is reflected by the first beamsplitter 15a to the rear end of the visible light path to fuse with the visible light image.

Optionally, the multi-mode binocular handheld optical device further comprises a projection module 50 arranged between the first beamsplitter 15a and the display module 40. The projection module 50 functions to project the distance information and/or the infrared image displayed on the display module 40 in the form of an optical signal toward the first beamsplitter 15a, then to be reflected by the first beamsplitter 15a toward the rear end of the visible light path. The projection module 50 is arranged in alignment with the display module 40, and the display module 40, the projection module 50, and the incident side of the first beamsplitter 15a jointly form a fusion light path. When the infrared mode is turned on, an infrared image displayed on the display module 40 is projected by the projection module 50 in the form of an optical signal toward the first beamsplitter 15a, then to be reflected by the first beamsplitter 15a toward the rear end of the visible light path to eventually form an image on the image plane at the rear end of the visible light path. When the visible light mode and the infrared mode are simultaneously turned on, the projection module 50 projects the infrared image displayed on the display module 40 toward the first beamsplitter 15a, thus to fuse with the visible light image formed on the image plane at the rear end of the visible light path. Optionally, the projection module 50 comprises a projection condenser lens corresponding to the display module 40 and multiple projection reflection mirrors located at one side of the projection condenser lens that is distant from the display module 40. With the optical signal of the image displayed on the display module 40 being condensed by the projection condenser lens, the multiple projection reflection mirrors, collaborating with each other, changes a transmission path of the optical signal of the image displayed on the display module 40 transmitting from the projection condenser lens to reflect the optical signal of the image toward the first beamsplitter 15a, thereby fulfilling the purpose of the projection module 50 projecting the image displayed on the display module 40 toward the first beamsplitter 15a. When the display module 40 is arranged to correspond to the second beamsplitter 15b, the projection module 50 is arranged between the second beamsplitter 15b and the display module 40, to project the distance information and/or the infrared image displayed on the display module 40 in the form of an optical signal toward the second beamsplitter 15b, and then to be reflected by the second beamsplitter 15b toward the rear end of the visible light path, and specifics is omitted herein. In the instant embodiment, the arrangement of the projection module 50 provides an effect of more accurately adjusting the transmission direction of light in the fusion light path to reduce optical loss.

Optionally, the infrared assembly 30 comprises, sequentially arranged along the infrared light path, an infrared objective lens group 33 and an infrared core 34, the infrared core 34 being connected with the display module 40. The infrared objective lens group 33 collects an infrared light of the target field of view, and the infrared core 34 converts the infrared light into an electrical signal for transmission to the display module 40 to display a corresponding infrared image. The multi-mode binocular handheld optical device can use an infrared barrel defines an infrared passageway 31 therein, and the interior of the infrared passageway 31 forms an infrared light path. An infrared entry window may be arranged at a front end of the infrared passageway 31, and the infrared objective lens group 33 is set at a location corresponding to the infrared entry window. The infrared objective lens group 33 and the infrared core 34 are arranged sequentially in the infrared light path. The infrared objective lens group 33 filters off light other than infrared light, thus to reduce interference of the other light with the formation of the infrared image. The infrared core 34 may be connected by a flexible flat cable to the display module 40, and the infrared image displayed on the display module 40 can be projected through the projection module 50 to get incident, in the form of an optical signal, onto the first beamsplitter 15a to be reflected by the first beamsplitter 15a toward the rear end of the visible light path in which it is located.

In other embodiments, referring to FIG. 11, the display module 40 comprises a transparent display screen 42 arranged in the visible light path of one of the left-eye image forming module 161 and the right-eye image forming module 162; and the visible light transmits through the transparent display screen 42 to fuse with the distance information and/or the infrared image displayed on the transparent display screen 42. The transparent display screen 42 can be a transparent OLED display screen, which admits the visible light to transmit therethrough. The transparent display screen 42 is directly set in the visible light path corresponding to the left-eye image forming module 161 or in the visible light path corresponding to the right-eye image forming module 162, and the visible light that forms a visible light image is fused, when transmitting through the transparent display screen 42, with the infrared image and/or the distance information displayed on the transparent display screen 42. In this, arranging the transparent display screen 42 in one of the visible light paths of the binocular visible light assembly, allows the infrared image formed by the infrared assembly 30 and the distance information measured by the laser assembly 20 to be fused with the visible light image by means of the transparent display screen 42, and the fusion of image is carried out directly in the visible light path to thereby eliminate arrangement of a fusion light path so as to further simplify product structure.

Optionally, the transparent display screen 42 may comprise light-transmitting pixels, and the light-transmitting pixels admit the visible light that travels through the transparent display screen 42 along the visible light path to transmit therethrough so as to form the visible light image on the image plane at the rear end of the visible light path. **In** the instant embodiment, the structure of the light-transmitting pixels of the transparent display screen 42 is not limited, provided they can allow the visible light to transmit therethrough. Optionally, the light-transmitting pixels may comprise a light transmissive medium, and the light transmissive medium does not interfere with the display screen displaying images. Preferably, the light transmissive medium comprises an optical medium material having a high light transmission rate so as to allow light incident onto the light-transmitting pixels to transmit therethrough at a high efficiency. Optionally, the light-transmitting pixels of the transparent display screen 42 may comprise light transmitting apertures, and the light transmitting apertures allow light of images incident onto the light-transmitting pixels of the transparent display screen 42 to pass therethrough. Further, the transparent display screen 42 may comprise displaying pixels, and the displaying pixels are operable to emit light so as to have the transparent display screen 42 displaying the infrared image and/or the distance information. In the instant embodiment, the structure of the displaying pixels of the transparent display screen 42 is not limited, and can be arranged according to imaging expectation in actual applications. For example, the transparent display screen 42 may control the displaying pixels to emit light according to the electrical signal of the infrared image formed by the infrared assembly 30, in order to have the transparent display screen 42 displaying the infrared image. Optionally, the displaying pixels of the transparent display screen 42 may comprises pixels of the three primary colors, so that the infrared image formed by the transparent display screen 42 includes various colors to better match the natural form of an object. Optionally, the displaying pixels may include, but not limited thereto, organic light-emitting diode (OLED) or light-emitting diode (LED). In an optional illustrative example, the transparent display screen 42 comprises arranged pixel units, and each of the pixel units comprises the light-transmitting pixels and the displaying pixels, wherein the light-transmitting pixels admit the visible light travels to the transparent display screen 42 to transmit therethrough, and the displaying pixels emit light to have the transparent display screen 42 projects the infrared image formed by the infrared assembly 30. The transparent display screen 42 uses the pixel units, wherein each of the pixel units includes the light-transmitting pixels and the displaying pixels, to allow the visible light that forms the visible light image and the infrared image displayed by the transparent display screen 42 to achieve pixel-level fusion, so as to enhance the effect of fusion for the two images and also to enhance the image quality of the two-light fusion image observed at the ocular lens group 18 to improve the use experience of the user.

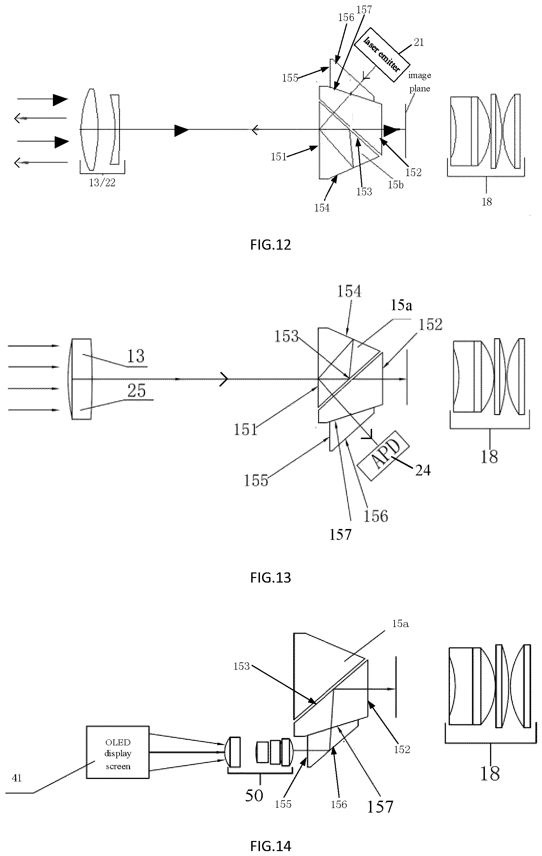

Optionally, referring jointly to FIGS. 10 and 12, the laser emitting module comprises a laser emitter 21 (Laser Diode, LD) arranged at one side of the corresponding visible light path and a second beamsplitter 15b arranged to receive a pulsed laser emitted from the laser emitter 21 in the corresponding visible light path. The pulsed laser emitted from the laser emitter 21 gets incident onto the second beamsplitter 15b, and is reflected by the second beamsplitter 15b toward a detection target to transmit along the corresponding visible light path in direction opposite to the incidence of the visible light, and the laser reflected back by the detection target is received by the laser receiving module. In this, the visible light of the target field of view, after entry, transmits along the corresponding visible light path toward the second beamsplitter 15b, and transmits through the second beamsplitter 15b to form the visible light image at the rear end of the corresponding visible light path. As such, in the visible light path to which the laser emitter 21 corresponds, the second beamsplitter 15b is arranged and the arrangement of the second beamsplitter 15b makes the laser emitting from the laser emitter 21 at one side of the visible light path and entering therein, then reflected to be coaxial with the visible light path and transmit outward in the opposite direction along the visible light path, allowing the laser emitting light path to share the visible light path of the binocular visible light assembly, while preserving independence of image forming for the visible light image and the laser range finding function, and also simplifying product structure. In the embodiment shown in FIG. 10, the first beamsplitter 15a and the second beamsplitter 15b are respectively arranged in the visible light paths of the left-eye image forming module 161 and the right-eye image forming module 162, and the laser receiving objective lens 25 is arranged frontwards of the first beamsplitter 15a in the visible light path of the left-eye image forming module 161, and the laser emitter 21 is arranged at one side of the second beamsplitter 15b in the visible light path of the right-eye image forming module 162.

It is noted that in the binocular visible light assembly, the structures of the left-eye image forming module 161 and the right-eye image forming module 162 can be different, and as shown in FIG. 11, the left-eye image forming module 161 and the right-eye image forming module 162 are different in that the transparent display screen 42 in arranged in the visible light path of only one of them, while there is no transparent display screen 42 arranged in the visible light path of another one of them. In an optional illustrative example, as shown in FIG. 11, the transparent display screen 42 is arranged in the visible light path in which the laser receiving objective lens 25 is set, and is located rearwards of the first beamsplitter 15a. In other embodiments, as shown in FIG. 10, the structure of the left-eye image forming module 161 and the right-eye image forming module 162 may be the same. For example, the first beamsplitter 15a and the second beamsplitter 15b are respectively arranged in the visible light paths of the left-eye image forming module 161 and the right-eye image forming module 162, and the display module 40 is an OLED display screen arranged at one side of the visible light path, and the infrared image and/or the distance information displayed on the display module 40 are transmitted, in the form of an optical signal, along the fusion light path toward the beamsplitter in any one of the visible light paths of the binocular visible light assembly to be reflected by the beamsplitter to coincide with the corresponding visible light path, thus to fuse with the visible light image on the image plane at the rear end of the corresponding visible light path.

Optionally, the left-eye image forming module 161 and the right-eye image forming module 162 each comprise a visible light entry window located at the front end of the visible light path, a visible light objective lens 13 arranged at the site of the visible light entry window, and an ocular lens group 18 arranged at the rear end of the visible light path. Further, the laser emitting module comprises a laser emitting objective lens 22 arranged at the front end of the corresponding visible light path, and the laser emitting objective lens 22 and the laser receiving objective lens 25 are respectively coaxial with the visible light objective lenses 13 corresponding thereto. In this, the laser receiving objective lens 25 is arranged at the site of the visible light entry window at the front end of the left-eye image forming module 161, and the first beamsplitter 15a is arranged frontwards of the ocular lens group 18 in the visible light path of the left-eye image forming module 161. When the visible light mode is turned on, visible lights of the target field of view are respectively collected by the visible light objective lenses 13 at the visible light entry windows of the left-eye image forming module 161 and the right-eye image forming module 162, and transmit along the visible light paths toward the ocular lens groups 18 at the rear side. When the laser ranging mode is turned on, the laser emitter 21 emits a pulsed laser, which is reflected by the second beamsplitter 15b of the right-eye image forming module 162 in the transmission direction of the pulsed laser, then to transmit along the visible light path of the right-eye image forming module 162 and transmits in the direction opposite to the incidence of the visible light toward the laser emitting objective lens 22. The laser emitting objective lens 22 collects the pulsed laser that is reflected by the second beamsplitter 15b to transmit along the visible light path, so that the pulsed laser transmits through the visible light objective lens 13 at the front end of the right-eye image forming module 162 can emit toward the detection target in the target field of view (FIG. 12). The laser reflected back by the detection target in the target field of view is collected by the laser receiving objective lens 25 at the visible light entry window of the left-eye image forming module 161, and transmits along the visible light path of the left-eye image forming module 161 toward the first beamsplitter 15a of the left-eye image forming module 161. In case that the visible light mode and the laser ranging mode are simultaneously turned on, the light paths that are set up when the visible light mode and the laser ranging mode are turned on are independently formed, and after incidence onto the visible light objective lens of the left-eye image forming module 161, the visible light and the laser is separated by the first beamsplitter 15a to have a predetermined ratio of the visible light transmitting therethrough to form an image at the rear end of the visible light path, and also to have the laser reflected and deviated from the visible light path for calculation of the distance information of the detection target.

Optionally, the laser receiving module further comprises a laser signal processing module arranged at a light exiting side of the first beamsplitter 15a of the left-eye image forming module 161. The laser reflected back by the detection target is received by the laser receiving objective lens 25 and transmits along the visible light path in which the laser receiving objective lens 25 in set toward the first beamsplitter 15a, so as to be separated by the first beamsplitter 15a to transmit toward the laser signal processing module to allow the laser signal processing module to calculate the distance information of the detection target. In this, the laser signal processing module is arranged in the direction in which the laser is transmitted out after being reflected by the first beamsplitter 15a to deviate, and the laser signal processing module may be electrically connected by a flexible flat cable to the display module 40, to receive the laser and to calculate the distance information for transmission to the display module 40 for displaying.

In the above, the laser signal processing module comprises a photoelectric detector 24 arranged at a light exiting side of the first beamsplitter 15a of the left-eye image forming module 161 and a laser signal processor 23 electrically connected to the photoelectric detector 24. The laser emitter 21 emits a pulsed laser toward the detection target, and the laser reflected back by the detection target is collected by the laser receiving objective lens 25 and transmits along the corresponding visible light path toward the first beamsplitter 15a, then to be reflected by the first beamsplitter 15a toward the photoelectric detector 24. The photoelectric detector 24 converts the laser reflected back by the detection target into an electrical signal transmitted to the laser signal processor 23, so as to allow the laser signal processor 23 to calculate and obtain the distance information with respect to the detection target. When the laser ranging mode is turned on, based on the user's operation of turning on the laser ranging function, the laser signal processor 23 issues a control signal to the laser emitter 21, and the laser emitter 21 emits a pulsed laser, which is reflected by the second beamsplitter 15b of the right-eye beamsplitter 162 to transmit along the visible light path toward the detection target. The laser reflected back by the detection target is collected by the laser receiving objective lens 25 at the visible light entry window of the left-eye image forming module 161 to transmit along the corresponding visible light path toward the first beamsplitter 15a, and is reflected by the first beamsplitter 15a of the left-eye image forming module 161 to deviate from the corresponding visible light path and transmit toward the photoelectric detector 24. The photoelectric detector 24 converts the laser reflected back by the detection target into an electrical signal transmitting to the laser signal processor 23. In the embodiment of the application, by means of the arrangement of the second beamsplitter 15b in the visible light path of the right-eye image forming module 162 and by means of a combining effect of the second beamsplitter 15b, a light path shared arrangement for the laser emitting light path and the visible light path of the right-eye image forming module 162 is fulfilled. By means of the arrangement of the first beamsplitter 15a in the visible light path of the left-eye image forming module 161 and by means of a splitting effect of the first beamsplitter 15a, a light path shared arrangement for the laser receiving light path and the visible light path of the left-eye image forming module 161 is fulfilled. The second beamsplitter 15b is arranged in a transmitting direction of the pulsed laser emitting from the laser emitter 21, and the photoelectric detector 24 is arranged in an exit direction of the laser reflected and separated by the first beamsplitter 15a, namely the relative position of the laser emitter 21 with respect to the second beamsplitter 15b of the right-eye image forming module 162 and the relative position of the photoelectric detector 24 with respect to the first beamsplitter 15a of the left-eye image forming module 161 are the same, and the laser emitting light path and the laser receiving light path are two light paths of opposite directions.

In the above, the multi-mode binocular handheld optical device further comprises a main control board 35 separately connected to the infrared assembly 30, the laser assembly 20, and the display module 40. The main control board 35 receives the electrical signal that is converted according to the infrared image from the infrared assembly 30 and/or the distance information transmitted from the laser assembly 20, and controls the display module 40 to display the infrared image and/or the distance information corresponding thereto. Optionally, the main control board 35 is provided with an image processing chip and a display connection port. The display module 40 is electrically connected with the display connection port, and the image processing chip carries out, according to the current image processing mode, processing on the infrared image. The image processing chip may comprise a series of image processing algorithms, such as image processing algorithms for enhancing, scaling, and noise reducing of the infrared image, and different ones of the image processing algorithms respectively correspond to different ones of image processing modes. The housing of the multi-mode binocular handheld optical device may be provided with image mode buttons for selection among the image processing modes, and the user may operate the image mode buttons to select a desired mode for processing the infrared image. The main control board 35 may be connected by a flexible flat cable to the display connection port and the display module 40 in order to output the infrared image that is made clearer through processing by the image processing algorithms to display on the display module 40. Optionally, the main control board 35 may be provided with a control circuit that controls operation of the laser assembly 20 to receive a request for laser range finding upon detecting the user's operation of turning on the laser ranging function, and controls the laser assembly 20 to emit a pulsed laser to fulfill range finding.

In the above, the laser signal processor 23 is electrically connected to the main control board 35. The laser receiving objective lens 25 is arranged at the site of the visible light entry window of the binocular visible light assembly. The laser signal processor 23 calculates the distance information with respect to the detection target according to the emitting time when the laser emitter 21 emits the pulsed laser, the receiving time when the laser receiving objective lens 25 receives the laser that is reflected back, and the laser propagation speed. The main control board 35 transmits the distance information, by way of the display connection port, to the display module 40 and controls the display module 40 to display the distance information. The photoelectric detector 24 can be an avalanche photo diode (APD) detector, and the laser receiving objective lens 25 is arranged at a location corresponding to the visible light entry window to realize the shared light path arrangement for the laser receiving light path and the corresponding visible light path. In addition, the arrangement of the first beamsplitter 15a in the visible light path realizes separation of the visible light and the laser, and the separated laser is converged by the photoelectric detector 24 located at one side of the first beamsplitter 15a, and the photoelectric detector 24 outputs a return signal that is subjected to amplification and signal processing to be then fed to the laser signal processor 23 to allow the laser signal processor 23 to calculate the distance information of the detection target. Optionally, the laser signal processor 23 comprises a counter and a laser signal processing circuit. The counter carries out counting according to the return signal outputted from the photoelectric detector 24 and transmits the counting information to the laser signal processing circuit, in order to calculate the distance information by means of the laser signal processing circuit and to transmit the distance information to the main control board 35, to allow the main control board 35 to control the display module 40 to display the distance information. In an optional, specific embodiment, the housing of the multi-mode binocular handheld optical device is provided with laser buttons that control emission of the pulsed laser from the laser emitter 21, and the main control board 35, based on operation of the laser buttons by the user, receives a ranging request signal and controls the laser assembly 20 to turn on the function of the laser range finding according to the ranging request signal.

Optionally, referring to FIG. 13, the structure of the first beamsplitter 15a and the second beamsplitter 15b are identical. Taking the first beamsplitter 15a as an example, the first beamsplitter 15a is composed of a Benhain prism and a half-penta prism. The Benhain prism comprises, arranged in sequence, an incident surface 151, a first edge reflecting surface 154, an exiting surface 152, a second edge reflecting surface 157, and intermediate reflecting surfaces 153 located between the incident surface 151 and the exiting surface 152 and arranged oblique. In this, the incident surface 151 faces an incident direction of visible light, and the exiting surface 152 is parallel with the incident surface 151 and located at the rear end of the visible light path, and the second edge reflecting surface 157 is connected to the half-penta prism. The half-penta prism is arranged on one side of the Benhain prism that is adjacent to the infrared assembly 30, and the half-penta prism comprises a light receiving surface 155 facing the display module 40 and a light emitting surface 156 facing the photoelectric detector 24 of the laser assembly 20. In an optional, specific embodiment, the Benhain prism comprises a first prism and a second prism separated from each other by an air gap, and the intermediate reflecting surfaces 153 includes two surfaces that are spaced from each other and define the air gap. The incident surface 151, the first edge reflecting surface 154, and one of the intermediate reflecting surfaces 153 are surfaces of the first prism, and the exiting surface 152, the second edge reflecting surface 157, and another one of the intermediate reflecting surfaces 153 are surfaces of the second prism. In the instant embodiment, the structures of the first beamsplitter 15a of the left-eye image forming module 161 and the second beamsplitter 15b of the right-eye image forming module 162 are identical. For the first beamsplitter 15a in the visible light path in which the laser receiving objective lens 25 is located, the light emitting surface 156 of the first beamsplitter 15a is aligned with the photoelectric detector 24. For the second beamsplitter 15b in the visible light path corresponding to the laser emitter 21, the light emitting surface 156 of the second beamsplitter 15b is aligned with the laser emitter 21. In different operation modes of the multi-mode binocular handheld optical device, the imaging light paths of the visible light assembly 10, the laser assembly 20, and the infrared assembly 30 are independent of one another, while when multiple ones of the operation modes are activated in a combined manner, the imaging light paths corresponding thereto are combined by means of the beamsplitters so as to achieve the purposes of shared light path arrangement and combination of multiple modes.

Optionally, the multi-mode binocular handheld optical device may includes a main barrel defining a left-eye visible light passageway and a right-eye visible light passageway of the binocular visible light assembly. The left-eye visible light passageway and the right-eye visible light passageway are parallel with each other and are each extended in a front-rear direction of the multi-mode binocular handheld optical device. The two visible light paths of the binocular visible light assembly are respectively formed in the visible light passageways corresponding to the left eye and the right eye, and the visible light entry windows are arranged at the front ends of the visible light passageways, and the beamsplitters corresponding to the visible light paths are arranged at locations closer to the ocular lens groups 18 in the corresponding visible light passageways. The emitting light path and the receiving light path of the laser are respectively integrated at the front sides of the visible light passageways for the two eyes in the binocular visible light assembly. The laser receiving light path is located in the visible light passageways to be completely coincident or just partly coincident with the corresponding visible light path, in order to fulfill the shared light path arrangement with the visible light path. By means of the arrangement of the beamsplitters in the visible light passageways, the visible light mode and the laser ranging mode can be turned on independently and may also be possible to turn on simultaneously, in order to suit the needs for various scenarios. In addition, the laser receiving light path and the visible light path adopting a shared light path arrangement makes the structure more compact, while multiple modes of the handheld optical device can be realized and the overall size can be reduced, making the entire device small and easy to carry.

In the above, the multi-mode binocular handheld optical device may include a main barrel and an infrared barrel that are integrally connected, and the two visible light entry windows are arranged side by side at the front end of the multi-mode binocular handheld optical device. The infrared entry window is located on the same vertical plane as the visible light entry windows, and the infrared passageway 31, the left-eye visible light passageway, and the right-eye visible light passageway are parallel with one another and are each extended in the front-rear direction of the multi-mode binocular handheld optical device. The two visible light objective lenses 13 are respectively arranged at the sites of the visible light entry windows and the infrared objective lens group 33 is arranged at a site corresponding to the infrared entry window, in order to respectively collect more visible light and infrared light transmitting from the target field of view toward the visible light entry windows and the infrared entry window. The left-eye visible light passageway and the right-eye visible light passageway are arranged side by side and are respectively alignable with the left eye and the right eye of a person, and the infrared passageway 31 may be arranged above the left-eye visible light passageway and the right-eye visible light passageway. The two visible light assembly, the laser assembly 20, and the infrared assembly 30 are integrated as a one piece arrangement through the connection between the main barrels and the infrared barrel, and interior spaces of the main barrel and the infrared barrel are in communication with each other. In the interior of the multi-mode binocular handheld optical device, a left-eye visible light imaging light path through which the visible light for the left eye passes for image forming, a right-eye visible light imaging light path through which the visible light for the right eye passes for image forming, an infrared imaging light path through which the infrared light passes for image forming, and a laser ranging light path that share the light path with the left-eye or right-eye visible light path are formed.

For the left-eye visible light imaging light path of the binocular visible light assembly, taking the laser receiving objective lens 25 being arranged at the site of the left-eye visible light entry window as an example, as shown in FIGS. 11 and 13, the incidence direction of visible light is the same as the incidence direction of the laser reflected back by the detection target. The visible light gets incident into the left-eye visible light passageway transmits toward the incident surface 151 of the first beamsplitter 15a and transmits through the incident surface 151 to enter the Benhain prism, then to transmit through the Benhain prism to exit from the exiting surface 152 and form a visible light image at the rear end of the corresponding visible light path. In a specific illustrative example, the visible light gets incident through the incident surface 151 into the Benhain prism, and a predetermined ratio of the visible light transmits sequentially through the intermediate reflecting surfaces 153 and the exiting surface 152, to finally transmit from the exiting surface 152 of the Benhain prism toward the rear end of the visible light path. In this, the predetermined ratio is set according the desired brightness for the visible light image, such as the predetermined ratio being 35%.

The right-eye visible light imaging light path of the binocular visible light assembly is the same as the left-eye visible light imaging light path (as shown in FIG. 10).

For the infrared imaging light path, the infrared light gets into the infrared passageway 31 is converted by the infrared core 34 into an electrical signal that is fed to the display module 40, and the display module 40 displays a corresponding infrared image according to the electrical signal. Referring to FIG. 14, for the multi-mode binocular handheld optical device adopting an arrangement in which the OLED display screen 41 is arranged at one side of the visible light path in which the laser receiving objective lens 25 is located, the infrared image displayed on the OLED display screen 41, as being subjected to projection by the projection module 50, travels in the form of an optical signal to transmit from the light receiving surface 155 of the half-penta prism to the light emitting surface 156, and then is reflected by the light emitting surface 156 toward the Benhain prism to enter the Benhain prism from the second edge reflecting surface 157 thereof, and further is reflected by the intermediate reflecting surface 153 of the Benhain prism to then transmit from the exiting surface 152 toward the rear end of the visible light path. For easy description, the section of light path along which the infrared image of the display module 40 is acted upon by the projection module 50 and the first beamsplitter 15a to transmit toward a human eye observation site at the rear end of the visible light path is referred to as a fusion light path.

For the laser ranging light path, the laser emitter 21 emits a pulsed laser, and the pulsed laser get incident into the second beamsplitter 15b to be subjected to the effect of reflection by the second beamsplitter 15b, to coincide with the visible light path of the right-eye imaging light path. The light path in which the pulsed laser is reflected by the second beamsplitter 15b and then transmits along the corresponding visible light path to emit to the outside is referred to as the laser emitting light path. After the laser emitter 21 emits the pulsed laser, the pulsed laser is subjected to an effect of light combining by the second beamsplitter 15b, and repeatedly reflected for multiple times in the interior of the second beamsplitter 15b to then transmit through the incident surface 151 to transmit in an opposite direction of the visible light path toward the detection target. In an optional illustrative example, the pulsed laser transmits sequentially through the light emitting surface 156 and the second edge reflecting surface 157 to get into the Benhain prism and then transmits, in the interior of the Benhain prism, through the intermediate reflecting surface 153 and then sequentially reflected by the incident surface 151, the first edge reflecting surface 154, and the intermediate reflecting surface 153 to then transmit through the incident surface 151 to emit to the outside in an opposite direction of the visible light path. The laser receiving objective lens 25 collects the laser reflected back by the detection target, and the laser gets incident to the incident surface 151 of the first beamsplitter 15a, wherein this part of light path is referred to as the laser receiving light path, which is coincident with the visible light path of the left-eye imaging light path. In the laser receiving light path, the laser is subjected to the effect of splitting by the first beamsplitter 15a and reflected multiple times in the interior of the Benhain prism to transmit to the second edge reflecting surface 157 that is adjacent to the half-penta prism, and then transmits through the half-penta prism to thereby transmits from the light emitting surface 156 of the half-penta prism toward the photoelectric detector 24. In an optional illustrative example, the laser gets into the Benhain prism from the incident surface 151 and then reflected sequentially by the intermediate reflecting surface 153, the first edge reflecting surface 154, and the incident surface 151 to transmit to the intermediate reflecting surface 153, and then transmits sequentially through the intermediate reflecting surface 153, the second edge reflecting surface 157, and the light emitting surface 156 to be used for calculation of the distance information.

After the laser is converged and processed by the photoelectric detector 24 and the laser signal processor 23, the distance information so calculated is displayed on the display module 40. As shown in FIG. 14, for the multi-mode binocular handheld optical device adopting an arrangement in which the OLED display screen 41 is arranged at one side of the visible light path in which the laser receiving objective lens 25 is located, the distance information displayed on the OLED display screen 41, as being subjected to projection by the projection module 50, travels in the form of an optical signal to transmit from the light receiving surface 155 of the half-penta prism to the light emitting surface 156, and then is reflected by the light emitting surface 156 toward the Benhain prism to enter the Benhain prism from the second edge reflecting surface 157 thereof, and further is reflected by the intermediate reflecting surface 153 of the Benhain prism to then transmit from the exiting surface 152 toward the rear end of the visible light path, wherein this part of light path is coincident with the fusion light path of the infrared image. As such, by means of the arrangement that the ranging light path of the laser assembly 20 is partly coincident with the binocular visible light assembly and partly coincident with the infrared assembly 30, the compactness of the entire structure of the multi-mode binocular handheld optical device can be greatly enhanced, while multiple modes are realizable.

In some other optional embodiments, the multi-mode binocular handheld optical device adopts a structural arrangement in which a transparent display screen 42 is set in the visible light path. As such, the visible light that forms a visible light image, when transmitting through the transparent display screen 42, is superimposed on and fused with the infrared image and/or the distance information displayed on the transparent display screen 42, and correspondingly, in the infrared imaging light path and the laser ranging light path, the part of fusion light path formed of the OLED display screen 41, the projection module 50, and the first beamsplitter 15a can be omitted.

Optionally, a lens cap including a light filter is arranged at an outside of the front end of the visible light path of the left-eye image forming module 161 and the right-eye image forming module 162, and the lens cap, when covering the visible light passageway, may filter off visible light while admitting a laser to pass. With the arrangement of the lens cap, when the lens cap is closed, visible light is not allowed to transmit through the visible light entry window into the visible light passageway. As such, closing the lens cap may make the visible light mode of the multi-mode binocular handheld optical device turned off, but the user, under this condition, is still allowed to independently turn on the laser ranging mode by operating the laser buttons, or to independently turn on the infrared mode by operating a power switch of the multi-mode binocular handheld optical device, or to simultaneously activate the laser ranging function and the infrared ranging function by operating the laser buttons and the power switch in order to suit the needs in different application scenarios. When it is desired to turn on the visible light mode, the user directly opens the lens cap.

The multi-mode binocular handheld optical device provided in the embodiments of the application offers at least the following advantages:
Firstly, the binocular visible light assembly, the infrared assembly 30, and the laser assembly 20 are integrated together as one piece to form a multi-mode binocular handheld optical device suitable for various application scenarios. The laser emitting module and the laser receiving module being arranged to respectively correspond to the left-eye image forming module 161 and the right-eye image forming module 162 allows for re-use an existing structural arrangement of the known binocular visible light imaging assembly, to realize the laser receiving light path and the laser emitting light path being respectively of shared light path arrangement with the two visible light paths. The beamsplitter being arranged in the visible light path allows the visible light and the laser in the same light path to be separated from each other so as to realize keeping the laser ranging function and the visible light imaging function independent of each other.
Secondly, the multi-mode binocular handheld optical device supports multiple operation modes: the visible light mode, the infrared mode, the laser ranging mode, the two-light fusion mode, the visible light ranging mode, and the two-light fusion ranging mode. the user may select a currently operation mode for the multi-mode binocular handheld optical device according to the needs for actual applications. The multi-mode binocular handheld optical device can be a multi-spectrum fusion binocular telescope. When the multi-spectrum fusion binocular telescope is in a condition of being not powered on or not connected to an electrical power supply, the laser assembly 20 and the infrared assembly 30 are both not in operation, and the binocular visible light assembly may maintain in operation independently, and the user may observe a target with a visible light image through the ocular lens group 18, so as to be downgradable in the daytime to operate as a visible light telescope for target observing and searching. It can also activate a fusion mode to highlight the target in the nighttime under a condition of insufficient lighting in the jungle to enhance the capability of searching. It can also only use the infrared mode in the nighttime for observing and searching, and for locking on a distance of a target, so as to realize a telescope operable for true all-day observation and search.
Thirdly, the visible light passageway of the binocular visible light assembly is provided, on the front end thereof, with the lens cap including a light filter, so that in the infrared mode or the infrared ranging mode, the lens cap can be closed, and under such a condition, the range finding function of the laser assembly 20 is maintained and the laser ranging information and the infrared image can be displayed on the display module 40, and the user may observe, through the ocular lens group 18, the infrared image or the infrared image that carries the laser ranging information.
Fourthly, the beamsplitter is composed of a Benhain prism and a half-penta prism, and the beamsplitter fulfills light splitting and combining, so that when visible and laser share the visible light passageway, a predetermined ratio of the visible light forming an image at the image plane after transmitting therethrough, and the laser is reflected toward a detector at one side of the beamsplitter for calculation of the distance information.
Fifthly, the binocular visible light assembly is selected as a binocular telescope of different specifications having fixed magnification, continuously variable magnification, or both fixed power and continuously variable magnification. The combination of the laser assembly 20, the infrared assembly 30 of shared light path arrangement with the visible light telescope of different specifications, can realize accurate target fusion to enhance the capability of target highlighting, so as to strengthen the capability of searching to thereby suit the needs of various users. The above description provides only certain embodiments of the present invention, and the scope of protection that the present invention pursues is not limited thereto. Variations and substitutes that can be easily contemplated by skilled artisans who are familiar with the technical field and fall within the technical scope disclosed in the present invention should be embraced by the scope of protection of the present invention. The scope of protection of the present invention are defined only by the scope of protection construed with the appended claims.

## Claims

1. A multi-mode handheld optical device, **characterized by** comprising a visible light assembly (10), a laser assembly (20), an infrared assembly (30), and a display module (40), the display module (40) being separately connected with the laser assembly (20) and the infrared assembly (30);
the visible light assembly (10) comprising at least one visible light imaging module, the visible light imaging module comprising an objective lens group and a beamsplitter (15) arranged in sequence along a corresponding visible light path; wherein when a visible light mode is turned on, a visible light of a target field of view is received by the objective lens group and then travels along the corresponding visible light path to transmit through the beamsplitter (15) to then form a visible light image at a rear end of the corresponding visible light path;
the laser assembly (20) comprising a laser emitting module and a laser receiving module, wherein when a laser ranging mode is turned on, the laser emitting module emits a pulsed laser toward a detection target, and a laser reflected back by the detection target is received by the objective lens group to then travel along a corresponding visible light path and is subjected to separation by the beamsplitter (15) to deviate from the corresponding visible light path, further for use in the laser receiving module to calculate distance information of the detection target to be displayed on the display module (40); wherein when an infrared mode is turned on, the infrared assembly (30) collects an infrared light of the target field of view for conversion into an infrared image to be displayed on the display module (40);
the distance information and/or the infrared image displayed on the display module (40) finally transmitting to the rear end of the visible light path to fuse with the visible light image.

2. The multi-mode handheld optical device according to claim 1, **characterized in that** the multi-mode handheld optical device is a monocular handheld optical device, and the visible light assembly (10) is a monocular visible light assembly, which comprises a visible light imaging module; and
the display module (40) is arranged at a light entry side of the beamsplitter (15), and the multi-mode handheld optical device further comprises a projection module (50) arranged between the beamsplitter (15) and the display module (40), and the projection module (50) is used to project the distance information and/or the infrared image displayed on the display module (40) in the form of an optical signal toward the beamsplitter (15) to be reflected by the beamsplitter (15) toward the rear end of the visible light path.

3. The multi-mode handheld optical device according to claim 2, **characterized in that** the laser receiving module comprises a photoelectric detector (24) arranged at one side of the beamsplitter (15) and a laser signal processor (23) connected to the photoelectric detector (24); and
the laser emitting module emits the pulsed laser toward he detection target, and the laser reflected back by the detection target, after being received by the objective lens group, transmits along the corresponding visible light path toward the beamsplitter (15) to be reflected by the beamsplitter (15) toward the photoelectric detector (24), and the photoelectric detector (24) converts the laser reflected back by the detection target into an electrical signal transmitted to the laser signal processor (23) to allow the laser signal processor (23) to calculate and obtain the distance information with respect to the detection target.

4. The multi-mode handheld optical device according to claim 3, **characterized by** further comprising a main housing (60) in which the visible light imaging module, the laser assembly (20), and the infrared assembly (30) are received; wherein the main housing (60) is formed, in an interior thereof, with a visible light passageway (11) with the visible light imaging module arranged therein and an infrared passageway (31) with the infrared assembly (30) arranged therein, wherein the visible light passageway (11) and the infrared passageway (31) are arranged parallel as being respectively at upper and lower sides in a height direction of the main housing (60), and a laser emitting window (220) is arranged between the visible light passageway (11) and the infrared passageway (31) at a front side of the main housing (60).

5. The multi-mode handheld optical device according to claim 2, **characterized in that** the beamsplitter (15) is composed of a Benhain prism and a half-penta prism.

6. The multi-mode handheld optical device according to claim 5, **characterized in that** the Benhain prism comprises, arranged in sequence, an incident surface (151), a first edge reflecting surface (154), an exiting surface (152), a second edge reflecting surface (157), and intermediate reflecting surfaces (153) that are arranged oblique and located between the incident surface (151) and the exiting surface (152); wherein the incident surface (151) faces an incident direction of the visible light, and the exiting surface (152) is parallel with the incident surface (151) and located at the rear end of the visible light path, the first edge reflecting surface (154) being connected to the half-penta prism; and
the half-penta prism is arranged on one side of the Benhain prism that is adjacent to the infrared assembly (30), and the half-penta prism comprises a light receiving surface (155) and a light emitting surface (156), the light receiving surface (155) facing the display module (40);
wherein the visible light gets into the Benhain prism through the incident surface (151) and transmits through the Benhain prism to exit from the exiting surface (152) to form the visible light image at the rear end of the corresponding visible light path; and the laser gets into the Benhain prism through the incident surface (151) and is reflected multiple times by the intermediate reflecting surfaces (153), the first edge reflecting surface (154) and the incident surface (151), then to transmit toward the half-penta prism, and exits from the light emitting surface (156) of the half-penta prism to be used for calculation of the distance information.

7. The multi-mode handheld optical device according to claim 1, **characterized in that** the visible light assembly (10) is a binocular visible light assembly (10b), and the binocular visible light assembly (10b) comprises a first visible light imaging module and a second visible light imaging module arranged to respectively correspond to two eyes; and
the beamsplitter (15) comprises a first beamsplitter (15a) arranged in the visible light path of the first visible light imaging module and a second beamsplitter (15b) arranged in the visible light path of the second visible light imaging module, the first visible light imaging module and the second visible light imaging module being used to respectively receive visible light of the target field of view to then form visible light images at the rear ends of the visible light paths respectively corresponding thereto;
wherein the laser reflected back by the detection target is received by the objective lens group of the first visible light imaging module and travels along the corresponding visible light path and is subjected to separation by the first beamsplitter (15a) to deviate from the corresponding visible light path for use by the laser receiving module to calculate the distance information of the detection target to be displayed on the display module (40).

8. The multi-mode handheld optical device according to claim 7, **characterized in that** the laser emitting module comprises a laser emitter arranged at one side of the second beamsplitter (15b), and the laser emitter emits the pulsed laser that is reflected by the second beamsplitter (15b) corresponding thereto to travel in an opposite direction along the corresponding visible light path, and then emits through the objective lens group of the second visible light imaging module toward the detection target, and further the laser reflected back by the detection target is received by the objective lens group of the first visible light imaging module.

9. The multi-mode handheld optical device according to claim 7, **characterized in that** the laser receiving module further comprises a photoelectric detector (24) arranged at a light exit side of the first beamsplitter (15a) and a laser signal processor (23) electrically connected to the photoelectric detector (24); and
the laser reflected back by the detection target, after being received by the objective lens group of the first visible light imaging module, transmits along the corresponding visible light path toward the first beamsplitter (15a) to be reflected by the first beamsplitter (15a) toward the photoelectric detector (24), and the photoelectric detector (24) converts the laser reflected back by the detection target into an electrical signal transmitted to the laser signal processor (23), thus to allow the laser signal processor (23) to calculate and obtain the distance information with respect to the detection target.

10. The multi-mode handheld optical device according to claim 7, **characterized in that** the display module (40) is arranged at a light entry side of the first beamsplitter (15a), and the distance information and/or the infrared image displayed on the display module (40) transmits in the form of an optical signal into the first beamsplitter (15a), then to be reflected by the first beamsplitter (15a) toward the rear end of the visible light path of the first visible light imaging module to fuse with the visible light image corresponding thereto;
or alternatively, the display module (40) is arranged at a light entry side of the second beamsplitter (15b), and the distance information and/or the infrared image displayed on the display module (40) transmits in the form of an optical signal into the second beamsplitter (15b), then to be reflected by the second beamsplitter (15b) toward the rear end of the visible light path of the second visible light imaging module to fuse with the visible light image corresponding thereto.

11. The multi-mode handheld optical device according to claim 10, **characterized in that** the multi-mode handheld optical device further comprises a projection module (50) arranged between the first beamsplitter (15a) and the display module (40), and the projection module (50) is used to project the distance information and/or the infrared image displayed on the display module (40) in the form of an optical signal toward the first beamsplitter (15a), then to be reflected by the first beamsplitter (15a) toward the rear end of the visible light path of the first visible light imaging module;
or alternatively, the multi-mode handheld optical device further comprises a projection module (50) arranged between the second beamsplitter (15b) and the display module (40), and the projection module (50) is used to project the distance information and/or the infrared image displayed on the display module (40) in the form of an optical signal toward the second beamsplitter (15b), then to be reflected by the second beamsplitter (15b) toward the rear end of the visible light path of the second visible light imaging module.

12. The multi-mode handheld optical device according to claim 7, **characterized in that**
the first beamsplitter (15a) is composed of a Benhain prism and a half-penta prism;
the Benhain prism comprises, arranged in sequence, an incident surface (151), a first edge reflecting surface (154), an exiting surface (152), a second edge reflecting surface (157), and intermediate reflecting surfaces (153) that are arranged oblique and located between the incident surface (151) and the exiting surface (152); wherein the incident surface (151) faces an incident direction of the visible light, and the exiting surface (152) is parallel with the incident surface (151) and located at the rear end of the corresponding visible light path, the second edge reflecting surface (157) being connected to the half-penta prism; and
the half-penta prism is arranged on one side of the Benhain prism that is adjacent to the infrared assembly (30), and the half-penta prism comprises a light receiving surface (155) and a light emitting surface (156), the light receiving surface (155) facing the display module (40);
wherein the visible light gets into the Benhain prism through the incident surface (151) and transmits through the Benhain prism to exit from the exiting surface (152) to form the visible light image at the rear end of the corresponding visible light path; and the laser gets into the Benhain prism through the incident surface (151) and is reflected multiple times by the intermediate reflecting surfaces (153), the first edge reflecting surface (154) and the incident surface (151), so as to transmit toward the half-penta prism, and finally exits from the light emitting surface (156) of the half-penta prism to be used for calculation of the distance information.

13. The multi-mode handheld optical device according to claim 1, **characterized in that** the visible light imaging module further comprises a zoom lens group (17) arranged rearwards of the beamsplitter (15) along the corresponding visible light path, and the zoom lens group (17) is used to subject the visible light that transmits through the beamsplitter (15) and forms the visible light image at the rear end of the visible light path, and the distance information and/or the infrared image finally transmit to the rear end of the visible light path used for magnification adjustment.

14. The multi-mode handheld optical device according to claim 1, **characterized in that** the objective lens group is a visible light objective lens group (13); or alternatively, the objective lens group comprises a laser receiving objective lens (25) and a visible light objective lens group (13).

15. The multi-mode handheld optical device according to claim 1, **characterized in that** a lens cap (19) including a light filter is arranged at a front end of the objective lens group, and is used to filter off the visible light and admits the laser to transmit therethrough.

16. The multi-mode handheld optical device according to claim 1, **characterized in that** the infrared assembly (30) comprises an infrared objective lens group (33) and an infrared core (34) arranged in sequence along an infrared light path, and the infrared core (34) is connected to the display module (40); wherein the infrared objective lens group (33) collects the infrared light of the target field of view, and the infrared core (34) converts the infrared light into an electrical signal to be transmitted to the display module (40) to display the infrared image corresponding thereto.

17. The multi-mode handheld optical device according to claim 1, **characterized in that** the display module (40) is arranged at a light entry side of the beamsplitter (15), and the distance information and/or the infrared image displayed on the display module (40) transmits, in the form of an optical signal, into the beamsplitter (15), then to be reflected by the beamsplitter (15) toward the rear end of the corresponding visible light path to fuse the visible light image corresponding thereto;
or alternatively, the display module (40) comprises a transparent display screen (42) arranged in the visible light path of the visible light imaging module; and the visible light in the corresponding visible light path transmits through the transparent display screen (42) to fuse with the distance information and/or the infrared image displayed on the transparent display screen (42).

18. The multi-mode handheld optical device according to claim 1, **characterized in that** operation modes of the multi-mode handheld optical device further comprises one of the following:
a two-light fusion mode in which the visible light mode and the infrared mode are both turned on, a visible light ranging mode in which the visible light mode and the laser ranging mode are both turned on, an infrared ranging mode in which the infrared mode and the laser ranging mode are both turned on, and a two-light fusion ranging mode in which the visible light mod, the infrared mode, and the laser ranging mode are all turned on.

19. The multi-mode handheld optical device according to claim 1, **characterized in that** the multi-mode handheld optical device is a handheld telescope.

20. A multi-mode handheld optical device, **characterized by** comprising a visible light assembly (10), a laser assembly (20), an infrared assembly (30), and a display module (40), the display module (40) being separately connected with the laser assembly (20) and the infrared assembly (30);
the visible light assembly (10) comprising at least one visible light imaging module, the visible light imaging module comprising an objective lens group and a beamsplitter (15) arranged in sequence along a corresponding visible light path; wherein when a visible light mode is turned on, a visible light of a target field of view is received by the objective lens group and then travels along the corresponding visible light path to transmit through the beamsplitter (15), to then form a visible light image at a rear end of the corresponding visible light path; the laser assembly (20) comprising a laser emitting module and a laser receiving module, the laser emitting module comprising a laser emitter arranged at one side of the beamsplitter (15), wherein when a laser ranging mode is turned on, the laser emitter emits a pulsed laser toward the beamsplitter (15) to be reflected by the beamsplitter (15) to travel in an opposite direction along the corresponding visible light path, then to emit through the objective lens group toward a detection target in the target field of view, and further a laser reflected back by the detection target is received by the laser receiving module for calculation of distance information of the detection target to be displayed on the display module (40);
wherein when an infrared mode is turned on, the infrared assembly (30) collects an infrared light of the target field of view for conversion into an infrared image to be displayed on the display module (40);
the distance information and/or the infrared image displayed on the display module (40) finally transmitting to the rear end of the visible light path to fuse with the visible light image.

21. The multi-mode handheld optical device according to claim 20, **characterized in that** the visible light assembly (10) is a binocular visible light assembly (10b), and the binocular visible light assembly (10b) comprises a first visible light imaging module and a second visible light imaging module arranged to respectively correspond to two eyes; and
the beamsplitter (15) comprises a first beamsplitter (15a) arranged in the visible light path of the first visible light imaging module and a second beamsplitter (15b) arranged in the visible light path of the second visible light imaging module, the first visible light imaging module and the second visible light imaging module being used to respectively receive visible light of the target field of view to then form visible light images at the rear ends of the visible light paths respectively corresponding thereto;
wherein the laser emitter is arranged at one side of the second beamsplitter (15b), and when the laser ranging mode is turned on, the pulsed laser emitting from the laser emitter is reflected by the second beamsplitter (15b) to travel in an opposite direction along the visible light path of the second visible light imaging module, and then emits through the objective lens group of the second visible light imaging module toward the detection target of the target field of view.

22. The multi-mode handheld optical device according to claim 21, **characterized in that** the laser reflected back by the detection target, after being received by the objective lens group of the first visible light imaging module, travels along the corresponding visible light path and is subjected to separation by the first beamsplitter (15a) to deviate from the corresponding visible light path for use by the laser receiving module to calculate the distance information of the detection target to be displayed on the display module (40).
